# EUROPEAN PATENT APPLICATION

(11) **EP 4 254 197 A1**
(43) Date of publication of application: **04.10.2023**
(21) Application number: 23156438.6
(22) Date of filing: 14.02.2023
(51) Int. Cl.: G06F 11/30, G06F 11/34, G06F 11/36

(54) **CONTROL REGISTER SET TO FACILITATE PROCESSOR EVENT BASED SAMPLING**

(30) Priority: 30.03.2022 US 202217708933
(71) Applicant: INTEL Corporation, Santa Clara, CA 95054 (US)
(72) Inventor: Merten, Matthew, Hillsboro, 97123 (US); Strong, Beeman, Portland, 97213 (US); Cohen, Moshe, 30900 Zichron Yaakov (IL); Yasin, Ahmad, 31015 Haifa (IL); Kleen, Andreas, Portland, 97209 (US); Bratanov, Stanislav, Portland, 97215 (US); Gopalakrishnan, Karthik, Folsom, 95630 (US); Schmid, Angela, Pleasonton, 94588 (US); Zhou, Grant, Chandler, 85226 (US)
(74) Representative: Goddar, Heinz J.

(57) **Abstract**

Techniques and mechanisms for configuring processor event-based sampling (PEBS) with a set of control registers. In an embodiment, a first control register of a processor is programmed to store a physical address of a location in a buffer which receives PEBS records. The first control register is further programmed or otherwise configured to store an indication of a size of the buffer. A second control register of the processor stores a physical address of a location in the buffer were a next PEBS record is to be stored. In another embodiment, the processor further comprises multiple control registers which variously configure PEBS generation on a per-counter basis.

## Description

### BACKGROUND

### 1. Technical Field

This disclosure generally relates to processing devices and more particularly, but not exclusively, to the configuring of event-based sampling.

### 2. Background Art

Performance analysis is the foundation for characterizing, debugging, and tuning a micro-architectural processor design, finding and fixing performance bottlenecks in hardware and software, as well as locating avoidable performance issues. Many microprocessors (or simply "processors") include processor event-based sampling hardware (PEBS) to generate state information using processor hardware that is indicative of an application executing on the processor. One such event is the execution of a particular instruction for the processor, including instructions that reference a data linear address (DLA) of a memory accessible to the processor.

PEBS is a profiling mechanism that logs a snapshot of processor state at the time of the event, which enables performance events to be identified as being associated with instruction pointers (IPs). However, developers have been relatively constrained as to how PEBS information is to be generated or otherwise accessed. As successive generations of processors continue to increase in speed and complexity, and as the variety and capabilities of software continue to increase, there is expected to be an increasing premium placed on improvements to how processor performance information is made available.

### BRIEF DESCRIPTION OF THE DRAWINGS

The various embodiments of the present invention are illustrated by way of example, and not by way of limitation, in the figures of the accompanying drawings and in which:
FIG. 1 is schematic block diagram of a system to determine event-based sampling information according to an embodiment.
FIG. 2 is a schematic block diagram of operations by a device to provide event-based sampling information, according to an embodiment.
FIG. 3 is a flow diagram showing features of a method to facilitate access to a repository of event-based sampling information according to an embodiment.
FIG. 4 is a schematic block diagram showing features of a device to provide access to a repository of event-based sampling information according to an embodiment.
FIG. 5 is a block diagram illustrating a set of model specific registers to configure the generation and storing of event-based sampling information according to an embodiment.
FIGs. 6A-6C are format diagrams each illustrating features of a respective model specific register according to a corresponding embodiment.
FIG. 7 is a flow diagram illustrating elements of a method for buffering a record of event-based sampling information according to an embodiment.
FIGs. 8A through 8B are block diagrams illustrating a generic vector friendly instruction format and instruction templates thereof according to an embodiment.
FIGs. 9A through 9D are block diagrams illustrating an exemplary specific vector friendly instruction format according to an embodiment.
FIG. 10 is a block diagram of a register architecture according to one embodiment.
FIG. 11A is a block diagram illustrating both an exemplary in-order pipeline and an exemplary register renaming, out-of-order issue/execution pipeline according to an embodiment.
FIG. 11B is a block diagram illustrating both an exemplary embodiment of an in-order architecture core and an exemplary register renaming, out-of-order issue/execution architecture core to be included in a processor according to an embodiment.
FIGs. 12A through 12B illustrate a block diagram of a more specific exemplary in-order core architecture, which core would be one of several logic blocks (including other cores of the same type and/or different types) in a chip according to an embodiment.
FIG. 13 is a block diagram of a processor that may have more than one core, may have an integrated memory controller, and may have integrated graphics according to an embodiment.
FIGs. 14 through 17 are block diagrams of exemplary computer architectures each according to a corresponding embodiment.
FIG. 18 is a block diagram contrasting the use of a software instruction converter to convert binary instructions in a source instruction set to binary instructions in a target instruction set according to an embodiment.

### DETAILED DESCRIPTION

Embodiments discussed herein variously provide techniques and mechanisms for configuring event-based sampling with a set of processor control registers. In the following description, numerous details are discussed to provide a more thorough explanation of the embodiments of the present disclosure. It will be apparent to one skilled in the art, however, that embodiments of the present disclosure may be practiced without these specific details. In other instances, well-known structures and devices are shown in block diagram form, rather than in detail, in order to avoid obscuring embodiments of the present disclosure.

Note that in the corresponding drawings of the embodiments, signals are represented with lines. Some lines may be thicker, to indicate a greater number of constituent signal paths, and/or have arrows at one or more ends, to indicate a direction of information flow. Such indications are not intended to be limiting. Rather, the lines are used in connection with one or more exemplary embodiments to facilitate easier understanding of a circuit or a logical unit. Any represented signal, as dictated by design needs or preferences, may actually comprise one or more signals that may travel in either direction and may be implemented with any suitable type of signal scheme.

Throughout the specification, and in the claims, the term "connected" means a direct connection, such as electrical, mechanical, or magnetic connection between the things that are connected, without any intermediary devices. The term "coupled" means a direct or indirect connection, such as a direct electrical, mechanical, or magnetic connection between the things that are connected or an indirect connection, through one or more passive or active intermediary devices. The term "circuit" or "module" may refer to one or more passive and/or active components that are arranged to cooperate with one another to provide a desired function. The term "signal" may refer to at least one current signal, voltage signal, magnetic signal, or data/clock signal. The meaning of "a," "an," and "the" include plural references. The meaning of "in" includes "in" and "on."

The term "device" may generally refer to an apparatus according to the context of the usage of that term. For example, a device may refer to a stack of layers or structures, a single structure or layer, a connection of various structures having active and/or passive elements, etc. Generally, a device is a three-dimensional structure with a plane along the x-y direction and a height along the z direction of an x-y-z Cartesian coordinate system. The plane of the device may also be the plane of an apparatus which comprises the device.

The term "scaling" generally refers to converting a design (schematic and layout) from one process technology to another process technology and subsequently being reduced in layout area. The term "scaling" generally also refers to downsizing layout and devices within the same technology node. The term "scaling" may also refer to adjusting (e.g., slowing down or speeding up - i.e. scaling down, or scaling up respectively) of a signal frequency relative to another parameter, for example, power supply level.

The terms "substantially," "close," "approximately," "near," and "about," generally refer to being within +/- 10% of a target value. For example, unless otherwise specified in the explicit context of their use, the terms "substantially equal," "about equal" and "approximately equal" mean that there is no more than incidental variation between among things so described. In the art, such variation is typically no more than +/-10% of a predetermined target value.

It is to be understood that the terms so used are interchangeable under appropriate circumstances such that the embodiments of the invention described herein are, for example, capable of operation in other orientations than those illustrated or otherwise described herein.

Unless otherwise specified the use of the ordinal adjectives "first," "second," and "third," etc., to describe a common object, merely indicate that different instances of like objects are being referred to and are not intended to imply that the objects so described must be in a given sequence, either temporally, spatially, in ranking or in any other manner.

The terms "left," "right," "front," "back," "top," "bottom," "over," "under," and the like in the description and in the claims, if any, are used for descriptive purposes and not necessarily for describing permanent relative positions. For example, the terms "over," "under," "front side," "back side," "top," "bottom," "over," "under," and "on" as used herein refer to a relative position of one component, structure, or material with respect to other referenced components, structures or materials within a device, where such physical relationships are noteworthy. These terms are employed herein for descriptive purposes only and predominantly within the context of a device z-axis and therefore may be relative to an orientation of a device. Hence, a first material "over" a second material in the context of a figure provided herein may also be "under" the second material if the device is oriented upside-down relative to the context of the figure provided. In the context of materials, one material disposed over or under another may be directly in contact or may have one or more intervening materials. Moreover, one material disposed between two materials may be directly in contact with the two layers or may have one or more intervening layers. In contrast, a first material "on" a second material is in direct contact with that second material. Similar distinctions are to be made in the context of component assemblies.

The term "between" may be employed in the context of the z-axis, x-axis or y-axis of a device. A material that is between two other materials may be in contact with one or both of those materials, or it may be separated from both of the other two materials by one or more intervening materials. A material "between" two other materials may therefore be in contact with either of the other two materials, or it may be coupled to the other two materials through an intervening material. A device that is between two other devices may be directly connected to one or both of those devices, or it may be separated from both of the other two devices by one or more intervening devices.

As used throughout this description, and in the claims, a list of items joined by the term "at least one of" or "one or more of" can mean any combination of the listed terms. For example, the phrase "at least one of A, B or C" can mean A; B; C; A and B; A and C; B and C; or A, B and C. It is pointed out that those elements of a figure having the same reference numbers (or names) as the elements of any other figure can operate or function in any manner similar to that described, but are not limited to such.

In addition, the various elements of combinatorial logic and sequential logic discussed in the present disclosure may pertain both to physical structures (such as AND gates, OR gates, or XOR gates), or to synthesized or otherwise optimized collections of devices implementing the logical structures that are Boolean equivalents of the logic under discussion.

The technologies described herein may be implemented in one or more electronic devices. Non-limiting examples of electronic devices that may utilize the technologies described herein include any kind of mobile device and/or stationary device, such as cameras, cell phones, computer terminals, desktop computers, electronic readers, facsimile machines, kiosks, laptop computers, netbook computers, notebook computers, internet devices, payment terminals, personal digital assistants, media players and/or recorders, servers (e.g., blade server, rack mount server, combinations thereof, etc.), set-top boxes, smart phones, tablet personal computers, ultra-mobile personal computers, wired telephones, combinations thereof, and the like. More generally, the technologies described herein may be employed in any of a variety of electronic devices including control registers of a processor.

As used herein, "processor event-based sampling" (PEBS) - or, for brevity, simply "event-based sampling" - refers to any of various types of hardware profiling mechanisms that collect processor state samples over time. For example, such sampling enables a user or resource (e.g., software) to determine an association of performance events each to a respective instruction pointer (IP).

As detailed in this disclosure, some embodiments variously facilitate a particular type of PEBS - referred to herein as "architectural PEBS" - wherein a configuring and/or other accessing of an output buffer is enabled with a particular type of one or more processor control registers. Processor control registers are a class of registers which are used to program a given processor and/or to otherwise indicate processor status. In this disclosure, "model specific register" is used as generic term which is synonymous with the term "processor control register."

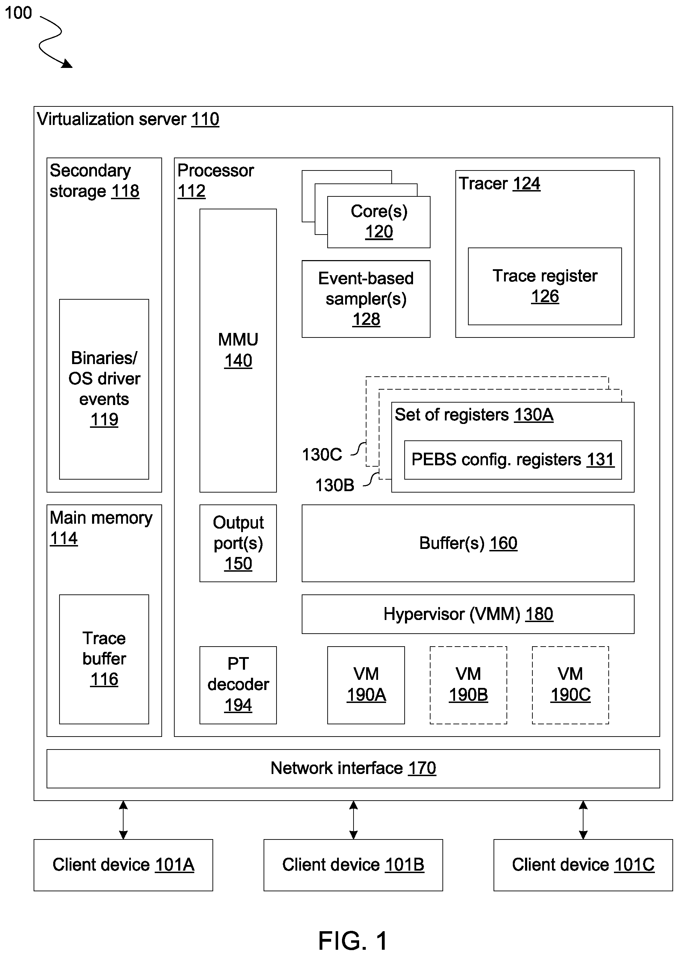

FIG. 1 is a schematic block diagram of a system 100 which provides PEBS functionality according to an embodiment. System 100 illustrates one example embodiment wherein a type of event-based sampling (referred to herein as architectural PEBS) is facilitated with model specific registers which store information including, for example, one or more physical addresses each of a respective location of an output buffer. Different embodiments are variously implemented in any of multiple other types of devices wherein a processor provides control registers to store such information in support of event-based sampling.

In the illustrative embodiment shown, system 100 includes a virtualization server 110 that supports a number of client devices 101A-101C. The virtualization server 110 includes at least one processor 112 that (for example) executes a hypervisor 180 which instantiates one or more virtual machines 190A-190C accessible by the client devices 101A-101C via a network interface 170. The processor 112 includes one or more cores 120, at least one event-based sampler 128, one or more sets of model-specific registers (MSRs) 130A-130C (e.g., one set for each of a plurality of VMs 190A-190C), a memory management unit (MMU) 140, output port(s) 150, one or more memory buffers 160, a hypervisor (or VMM) 180, and - in some embodiments - a processor tracer 124 (or just "tracer 124"), and a processor trace (PT) decoder 194.

The virtualization server 110 includes a main memory 114 (which, in some embodiments, includes a trace buffer 116 section), and a secondary storage 118 having a database 119 to store program binaries and operating system (OS) driver events, and the like. Data in the secondary storage 118 is stored in blocks referred to as pages, and each page corresponds to a set of physical memory addresses. The virtualization server 110 employs virtual memory management in which applications run by the core(s) 120, such as the virtual machines 190A-190C, use virtual memory addresses that are mapped to guest physical memory addresses by a memory management unit (MMU) 140.

The core 120 executes the MMU 140 to load pages from the secondary storage 118 into the main memory 114 for faster access by software running on the processor 112 (e.g., on the core). When one of the virtual machines 190A-190C attempts to access a virtual memory address that corresponds to a physical memory address of a page loaded into the main memory 114, the MMU 140 returns the requested data. The core 120 executes the VMM 180 to translate guest physical addresses to host physical addresses of main memory and provide parameters for a protocol that allows the core 120 to read, walk and interpret these mappings.

A given virtual machine (e.g., one of VMs 190A, 190B, or 190C) includes a guest operating system and one or more applications using the processor 112. By way of illustration and not limitation, a virtual machine executes a performance analysis application that uses and/or facilitates event-based sampling - e.g., allowing a user of the virtual machine to debug a guest OS or other applications executed by the virtual machine. Alternatively or in addition, such a performance analysis application is run directly on a host OS.

In one illustrative embodiment, core 120 includes or otherwise operates based on a set of model-specific register (MSRs) 130A - e.g., for use by VM 190A - although many of the MSRs can be shared by a single core or across several cores 120. In one embodiment, information in various MSRs is swapped in and out of a core when a VM is swapped in and out of the core. In some embodiments, one or more of cores 120 each further includes a virtual machine control structure (not shown) to hold the current state of a VM when this swapping occurs.

In one embodiment, the processor 112 includes any kind or number of event-based samplers 128. While the event-based samplers 128 are illustrated as separate from the cores 120, an event-based sampler 128 is implemented in a core as can other hardware and firmware described herein such as the tracer 124 and set of MSRs 130A-130C, for example.

The event-based sampler 128 is implemented by microcode instructions, digital circuitry, analog circuitry, or a combination thereof. In another embodiment, the event-based sampler 128 records and stores information about processor execution from sources such as performance counters, registers and execution units, which are included in cores or in another portion of the processor 112. In yet another embodiment, the event-based sampler 128 records and stores information about processor execution by selectively dumping the contents of register, counters, or other portions of the processor 112.

The event-based sampler 128 records and stores information about the execution of processor at any suitable time. In one embodiment, the event-based sampler 128 performs data collection upon retirement of the instructions, after execution. The event-based sampler thus records information for a given retired instruction after it is executed, providing a snapshot of processor state at such a time. In another embodiment, event-based sampler performs data collection upon retirement of memory access instructions such as loads or stores. In another embodiment, the event-based sampler performs data collection after the oldest instruction retires in response to an unrelated activity elsewhere in the processor, providing the time of the occurrence of the event.

As described in more detail herein, various MSRs - such as the illustrative PEBS configuration registers 131 shown - each plays a respective role in facilitating PEBS data generation and storage. In various embodiments, the event-based sampler 128 outputs the results of performing data collection as a record such as one which is stored to the memory buffer 160. A base address and range for the PEBS records within memory buffer 160 is defined in PEBS configuration registers 131. Upon receipt of such data in memory buffer 160, at a specified address thereof, the data is used to perform various analyses with respect to the processor 112. For example, secure profiling is performed, wherein the current state of the processor is analyzed to determine whether a security or malware breach has occurred. In one embodiment, a profiler obtains a statistical call stack for the sampling information returned from a retired instruction. In another embodiment, a profiler performs call parameter profiling using a pre-computed value of a common compute-heavy function, such as encryption.

Although some embodiments are not limited in this regard, core 120 includes a tracer 124 that captures trace data generated as a result of the processor 112 executing software instructions on hardware threads of the core 120 while tracing is enabled. The tracer 124 also formats (e.g., packetizes or packages) the trace data into individual trace data packets for routing as a packet stream. The tracer 124 is implemented by microcode instructions, digital circuitry, analog circuitry, or a combination thereof. In one embodiment, the tracer 124 includes primarily dedicated hardware circuitry and microcode, although the tracer 124 (or a separate software tool) also executes software instructions to take over handling of the data packets once generated by the dedicated hardware and firmware. In various embodiments, processor 112 comprises a performance monitoring unit (PNW) which includes, or is otherwise configured to operate with, tracer 124.

The tracer 124 includes a trace register 126 that stores a value indicating whether tracing is enabled or disabled. As with other data generated by the processor 112, the trace data of the packet stream is initially stored in an internal memory buffer 160 before being written to the main memory 114. Once the trace data is in the main memory 114, software accesses the trace data and analyzes it or presents it to a user for interpretation. In other embodiments, virtualization server 110 omits one or more process trace mechanisms such as PT decoder 194, processor tracer 124, etc.

While tracing involves generating trace data for any instruction retiring in the processor 112, PEBS sampling involves taking snapshots of the processor state periodically and then relying on statistical analysis to extrapolate between snapshots to obtain a fuller picture of performance surrounding execution events of interest. In short, when an event counter overflows, the processor 112 traps execution after a next matching event, records a processor state, reloads the counter, and resumes execution. To capture the processor state, PEBS microcode generates (e.g., "dumps") a log or record of data (e.g., an instruction pointer (IP), processor execution states, memory access addresses and latencies, and the like) upon occurrence of an event for an nth time. Configuration of the PEBS output buffer and the PEBS reload values is done through a set of fields stored in PEBS configuration registers 131.

Conventionally, a PEBS output buffer, providing functionality such as that of memory buffer 160, is configured using a PEBS configuration block - e.g., referred to as the Debug Store (DS) management area in some Intel architectures - which itself is a linearly (virtually) addressed region in memory. In existing PEBS technologies, the output buffer is configured and accessed using processor control register - e.g., such as the IA32_DS_AREA model specific register (MSR) of an Intel processor - which includes an identifier of a location of the configuration block.

In these conventional approaches, the configuration block includes a set of fields which identify virtual addresses of (for example) a location of a base of the output buffer, a current location for buffering to the output buffer, a maximum extent of the output buffer, an interrupt threshold location in the output buffer, and/or the like. Other fields of the configuration block are to store reset values each for a respective counter. With such information, the configuration block provides an interface for software to configure PEBS functionality. Based on such configuration, PEBS microcode (and, for example, other processor resources) performs event-based operations to store a given PEBS record into the output buffer. Such record storing occurs, for example, in response to an instance of a performance counter (PMC) overflowing or otherwise reaching some threshold count, whereupon the PMC counter is automatically reloaded, with a predetermined reload value, to enable a next instance of record generation.

Existing PEBS technologies variously suffer certain shortcomings. For example, because the PEBS configuration and output buffer are specified using linear (or virtual) addresses, it is often problematic to collect PEBS records in some software contexts, or across various software contexts. Since each context likely has its own set of pages and extended page tables (EPTs), a performance profiler would typically need to map the buffer into the context of every monitored process, which is often untenable. Furthermore, some features of PEBS record generation (i.e., the state that is captured) are usually configurable only on a global basis - e.g., using a common PEBS enable setting, a common record data group selection, or the like. Thus, even if PEBS is being used by different software entities (e.g., a VMM, a guest OS, and/or a user profiler), some or all configuration options have to be the same for all such entities. Further still, conventional PEBS configuration mechanisms are usually reliant on control register mechanisms which are specific to a particular processor model, which means that software cannot count on future PEBS configuration mechanisms being backwards compatible.

Some embodiments variously facilitate improved PEBS functionality by providing processor control registers which directly store the type of information which, conventionally, is kept in a PEBS configuration block (e.g., rather than merely storing a virtual address for a location of a configuration block which includes such information). In various embodiments, such processor control registers facilitate a mechanism whereby PEBS enablement, record data group selection, and/or other such PEBS features are independently configured on a per-counter basis. In one such embodiment, one or more processor control registers are each to store a respective physical address for a corresponding PEBS record buffer. In providing such processor control registers, some embodiments variously enable or otherwise improve the accessibility of PEBS functionality to one or more software environments (e.g., including one or more virtualization environments) across various contexts.

For brevity, a provisioning of such processor control registers in support of PEBS functionality is referred to herein as "architectural PEBS." In various embodiments, architectural PEBS replaces the use of a linearly addressed configuration block - for example, a conventional DS management area - to provide an architectural configuration interface which, for example, has increased flexibility for users and/or support for additional usage models.

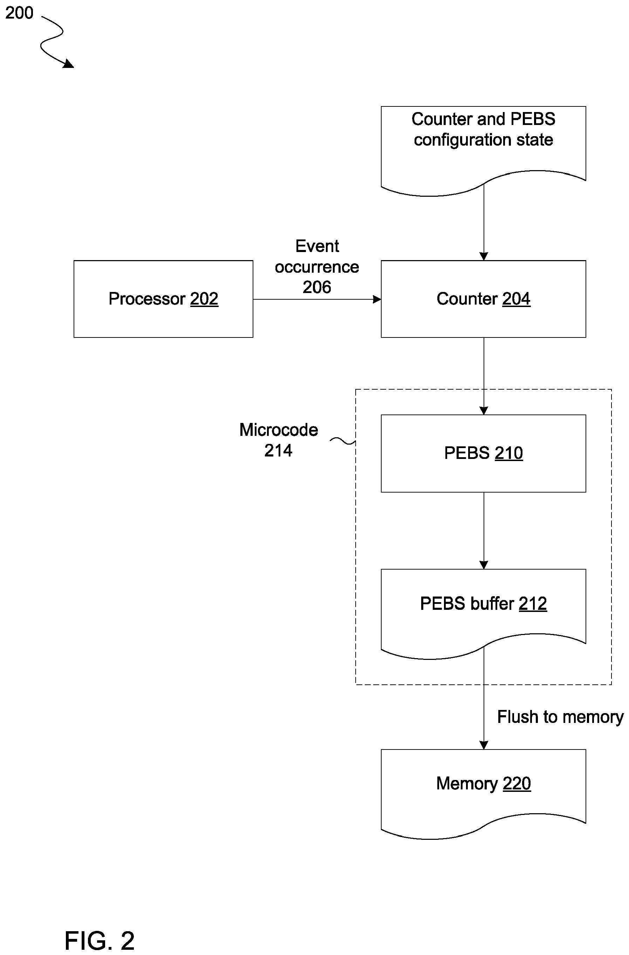

FIG. 2 is a block diagram of a system 200 which is to provide architectural PEBS functionality according to an embodiment. System 200 includes some or all features of virtualization server 110, for example, or any of various other devices which comprise processor control registers that support architectural PEBS as described herein. In FIG. 2, the block diagram illustration should not be understood to represent a strictly confined hardware configuration, but rather, the blocks disclosed should be understood as logical blocks that include any suitable combination of hardware, software, and/or firmware to carry out the function of the block. Blocks may merge, crossover, or be divided in some embodiments.

In this example, a processor 202 of system 200, while executing software, encounters an event occurrence 206. Event occurrence 206 is configured according to user input, such as a user configuring registers or memory locations that indicate the types of events that should be tracked, and how often they should be tracked. This includes, for example, logging every N occurrences of a cache miss - e.g., wherein N is a relatively large number for a heavyweight visibility function. For example, certain program states are logged every million cache misses. Logged program states include, for example, the status of certain variables, and the status of certain program flow metrics, such as branches taken or not taken.

Counter 204 observes the occurrence of each event occurrence 206, and increments counter 204 after each occurrence - e.g., according to a configuration state which, as described herein, is provided at least in part with one or more MSRs (for example, providing various configurations each on a counter-specific basis). Once counter 204 reaches a programmed threshold, counter 204 launches PEBS handler 210. PEBS handler 210 is implemented, for example, in microcode 214. Either immediately, or on a delayed basis (such as when resources are available), PEBS buffer 212 is flushed out to a structure in main memory 220, either automatically or upon a software instruction.

As described herein, PEBS buffer 212 is configured (and, for example, accessed) in a memory block using model specific registers which, for example, store one or more physical addresses each for a respective location in that memory block. In some embodiments, model specific registers additionally or alternatively store other PEBS configuration information including, but not limited to, a location where a next PEBS record is to be buffered, a buffer location which is to correspond to a threshold buffer level, PEBS enablement information, counter values, and/or the like.

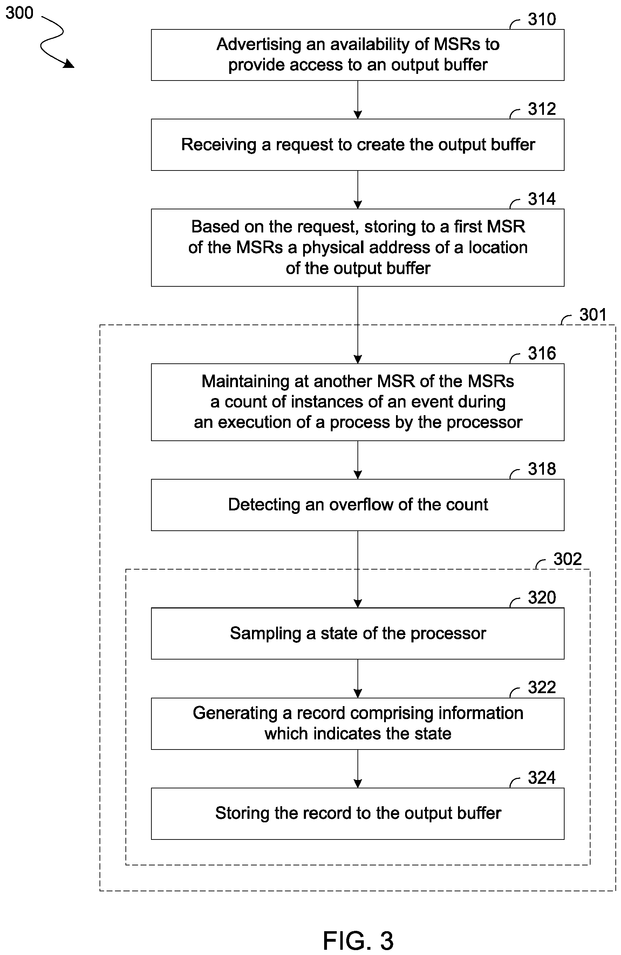

FIG. 3 shows operations of a method 300 to provide access to PEBS information with multiple MSRs according to an embodiment. Method 300 is performed, for example, with processor 112, processor 202, microcode 214 and/or other suitable logic, in various embodiments.

As shown in FIG. 3, method 300 comprises (at 310) advertising an availability of model specific registers (MSRs) of the processor to provide access to a PEBS output buffer (such as one of the one or more memory buffers 160 or PEBS buffer 212. The advertising at 310 is performed, for example, with a BIOS, a performance monitoring unit (PMU), a tracer unit and/or other suitable logic - e.g., wherein the advertising is adapted, for example, from any of various techniques whereby a processor makes its capabilities known to software and/or other hardware.

Method 300 further comprises (at 312) receiving a request to create the output buffer - e.g., wherein the request is from a host OS, a hypervisor, a guest OS, or other suitable software which is to configure PEBS functionality.

Based on the request received at 312, method 300 (at 314) stores, to a first MSR of the MSRs, a first physical address of a location of the output buffer. For example, the first MSR is to identify a set of locations in memory which are to provide the output buffer. In one such embodiment, the first physical address identifies a start of the output buffer - e.g., wherein (in some embodiments) method 300 further stores to the first MSR an indication of size which the output buffer is to have.

In various embodiments, method 300 performs one or more additional operations to configure the output buffer and/or other PEBS functionality - e.g., based on the request received at 312 and/or information provided (for example) by a source of the request. By way of illustration and not limitation, in some embodiments, the MSRs comprise a first plurality of MSRs, each of which is configured by method 300 to provide a respective performance counter - e.g., wherein the first plurality of MSRs are to provide one or more general purpose performance counters and/or one or more fixed function performance counters.

In one such embodiment, the MSRs further comprise a second MSR (e.g., providing functionality adapted, for example, from that of an IA32_PERF_GLOBAL_CTRL register of an Intel architecture) comprising control bits which each correspond to a different respective one of the first plurality of MSRs. For each one of the control bits, method 300 additionally or alternatively writes a value of the control bit to determine whether the corresponding one of the first plurality of MSRs is to be enabled to maintain a respective count.

In another such embodiment, the MSRs additionally or alternatively comprise a third MSR (e.g., providing functionality adapted, for example, from that of an IA32_PERF_GLOBAL_STATUS register of an Intel architecture) comprising status bits which each correspond to a different respective one of the first plurality of MSRs. For each one of the status bits, method 300 additionally or alternatively writes a value of the bit to indicate whether a count maintained with the corresponding one of the first plurality of MSRs is currently in an overflow state. In some embodiments, the third MSR further comprises another status bit to indicate whether a threshold utilization level of the output buffer has been reached.

In another such embodiment, the MSRs further comprise a first one or more MSRs (e.g., each providing functionality adapted, for example, from that of a IA32_PERFEVTSEL[0] register of an Intel architecture) which each correspond to a different respective one of the first plurality of MSRs. For each of the first one or more MSRs, method 300 additionally or alternatively programs the MSR to identify a condition according to which a count is to be maintained with the corresponding one of the first plurality of MSRs.

In another such embodiment, the MSRs further comprise a second one or more MSRs which each correspond to a different respective one of the first plurality of MSRs - e.g., wherein the second one or more MSRs are to determine PEBS record formats on a per-counter basis. For each of the second one or more MSRs, method 300 additionally or alternatively programs the MSR to identify a respective one or more types of information which are to be included in a record based on an overflow by a performance counter which is provided with the corresponding one of the first plurality of MSRs

In another such embodiment, the MSRs further comprise a third one or more MSRs (e.g., e.g., providing functionality adapted, for example, from that of a IA32_A_PMC[0] register of an Intel architecture) which each correspond to a different respective one of the first plurality of MSRs. For each of the third one or more MSRs, method 300 additionally or alternatively programs the MSR to provide an alias address with which the corresponding one of the first plurality of MSRs can be accessed.

In some embodiments, method 300 additionally or alternatively comprises operations 301 to perform processor event-based sampling based on the storing at 314, or on additional programming and/or other configuring of the MSRs. By way of illustration and not limitation, operations 301 comprise (at 316) maintaining at another MSR of the MSRs - e.g., at one of the above-described first plurality of MSRs - a count of instances of an event during an execution of a process by the processor. In one example embodiment, the maintaining at 316 includes or is otherwise based on event-based sampler 128 monitoring various events which are based on an execution of a process with the one or more cores 120. Operations 301 further comprise (at 318) detecting an overflow of the count - e.g., wherein PEBS handler 210 (or other suitable logic) detects that the counter provided with the other MSR has rolled over, or otherwise reached or exceeded some predetermined threshold count value.

In an embodiment, operations 301 includes additional operations 302, which are based on the overflow detected at 318, to sample and record processor state according to the previously determined configuration of PEBS functionality. For example, operations 302 comprise (at 320) sampling a state of the processor, and (at 322) generating a record comprising information which indicates the sampled state. In an embodiment the sampling at 320 and/or the generating at 322 is based on a programming of the above-described second one or more MSRs.

The record generated at 322 is then stored to the output buffer (at 324). For example, in some embodiments, the MSRs further comprise an additional MSR to store another physical address which identifies a location in the output buffer where a next record is to be stored. The record is stored to the output buffer at 324 based on the storing of the second physical address to the additional MSR - e.g., wherein the additional MSR is then changed to update the physical address where a next subsequent record is to be stored.

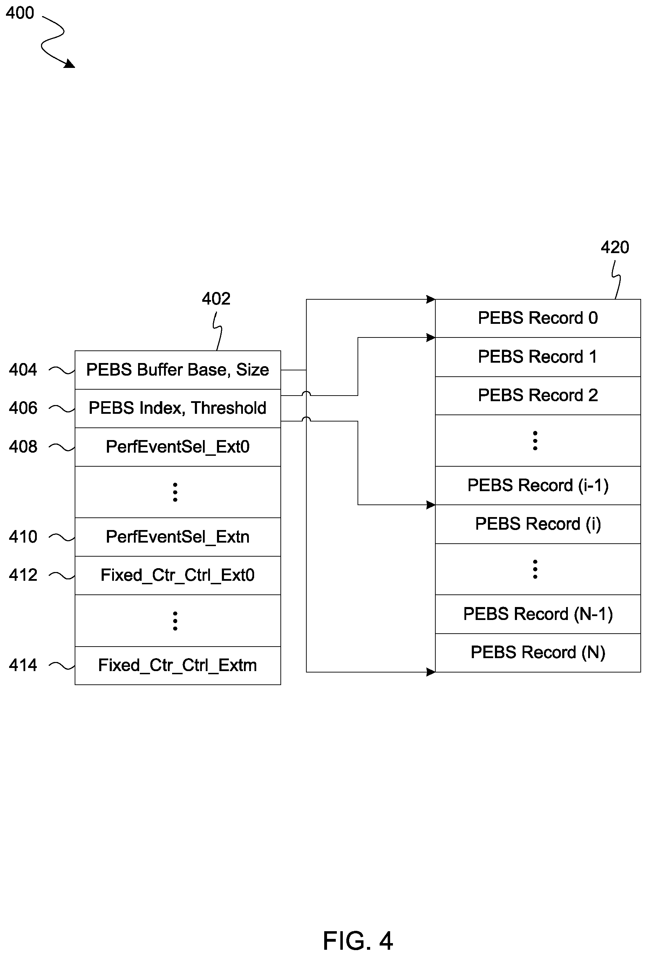

FIG. 4 illustrates a device 400 which provides architectural PEBS mechanisms for generating records of sampling information according to an embodiment. Device 400 includes features of virtualization server 110 or system 200, in some embodiments - e.g., wherein one or more operations of method 300 are performed with device 400.

In various embodiments, device 400 supports PEBS facility which allows software to profile workload behavior relative to a set of events. In one such embodiment, a set of model specific registers 402 of device 400 comprises one or more event counters (not shown) which are variously preloaded so they each reach an overflow condition after the occurrence of a respective predefined number of events. On overflow of a PEBS-enabled counter, the PEBS facility is armed. At the occurrence of the next precise (PEBS) event, the processor takes an assist and capture machine state in a predefined memory buffer.

When a counter is enabled to capture the machine state, the processor writes machine state information to a memory buffer specified by one or more MSRs as detailed below. In this mode, when the counter overflows from maximum count to zero, the PEBS hardware is armed. Upon occurrence of the next PEBS event, the PEBS hardware triggers and causes a PEBS record to be written. In various embodiments, each field in the PEBS record is 64 bits long, for example.

In various embodiments, software programs the PEBS facility by programming PEBS-enabled events in the performance monitoring unit (PNW). In an embodiment, such events are a subset of the total events supported by the PMLT, and include, for example, memory instructions retired, memory stores retired, memory uncore events retired, instructions retired, other assists, microcode operations retired, branch instructions retired, branch mispredicts retired, branch condition mispredicts, and floating point assists. In some embodiments, different instances of counter-specific PEBS hardware are variously enabled independently - e.g., on a per-counter basis - each by setting a respective control parameter of a corresponding MSR.

By way of illustration and not limitation, model specific registers 402 which facilitate architectural PEBS with system 400 includes some or all of the following:

Model Specific Register 404 (PEBS Buffer Base, Size): This MSR is programmed with the physical address of the first byte of the allocated PEBS buffer 420 in memory. Furthermore, in some embodiments, this MSR is programmed with an identifier of a size of the PEBS buffer 420 (or, for example, the physical address of the first byte past the end of the PEBS buffer 420). Software, microcode and/or other suitable logic reads this MSR to determine a range of physical addresses for memory locations which are in the PEBS buffer 420. In some embodiments, software allocates this memory from a non-paged pool.

Model Specific Register 406 (PEBS Index, Threshold): This MSR is initially programmed with the beginning physical address of the PEBS buffer. Software, microcode and/or other suitable logic reads this MSR to determine the target location of a PEBS record write. After a PEBS record has been written, microcode updates this MSR with the physical address of the next PEBS record to be written. PEBS buffer 420 illustrates the state of PEBS Index after the first PEBS record is written. Furthermore, in some embodiments, this MSR represents an interrupt threshold which allows software to receive an interrupt notification indicating that the PEBS buffer is nearly exhausted. In one such embodiment, this MSR is programmed with the physical address of a byte within the PEBS buffer that represents the threshold level of buffer utilization. After writing a PEBS record, microcode checks the address of the next record to be written with the value of this MSR. If the address is the same as (or, for example, greater than) the programmed physical address, microcode causes a performance management interrupt. In various embodiments, this is the same interrupt that is generated by a counter overflow (for example).

Model Specific Registers 408,..., 410 (PerfEventSel_Ext0,..., PerfEventSel_Extn): These (n+1) MSRs - where n is some positive integer - each correspond to a different respective one of (n+1) general-purpose counters PERFEVTSEL0,..., PERFEVTSELn. For a given one of MSRs 408,..., 410, the MSR is programmed with information to determine whether and how a PEBS record is to be sent to an output buffer in the event of an overflow by the corresponding general-purpose counter. By way of illustration and not limitation, such information identifies whether PEBS is enabled for the corresponding general-purpose counter, and/or whether - and, for example, how - information from one or more types of register groups are to be included in a PEBS record which is generated based on an overflow of that general-purpose counter. In one such embodiment, the one or more types of register groups include (for example) an event specific register group, a general purpose register group, a vector register group, a last branch register group, and/or the like. In some embodiments, the general-purpose counters PERFEVTSEL0,..., PERFEVTSELn are each provided at a different respective MSR.

Model Specific Registers 412,..., 414 (Fixed_Ctr_Ctrl_Ext0,..., Fixed_Ctr_Ctrl_Extm): These (m+1) MSRs - where m is some positive integer - each correspond to a different respective one of (m+1) fixed function counters FIXED_CTR0,... , FIXED_CTRm. For a given one of MSRs 412,..., 414, the MSR is programmed with information to determine whether and how a PEBS record is to be sent to an output buffer in the event of an overflow by the corresponding fixed function counter. By way of illustration and not limitation, such information identifies whether PEBS is enabled for the corresponding fixed function counter, and/or whether - and, for example, how - information from one or more types of register groups are to be included in a PEBS record which is generated based on an overflow of that fixed function counter. In one such embodiment, the one or more types of register groups include (for example) an event specific register group, a general purpose register group, a vector register group, a last branch register group, and/or the like. In some embodiments, the fixed function counters FIXED_CTR0,..., FIXED_CTRm are each provided at a different respective MSR.

When profiling test code, software typically desires to collect PEBS records or event data for every N events, where N is chosen to be a value that will provide statistically significant samples while not generating excessive intrusion. To accomplish this, counters are typically preloaded with the value of negative N (-N), so that the counter will count up and overflow causing an interrupt for every N events detected.

Note that the PEBS buffer 420 is not treated as a circular buffer. Each time a PEBS record is written, microcode updates the "PEBS Index, Threshold" MSR 406 to the physical address of the next PEBS record to write. Once this value becomes equal to that contained in the "PEBS Buffer Base, Size" MSR 404, microcode simply stops writing PEBS records. In some embodiments, no interrupts will be generated. In one such embodiment, to re-enable the PEBS buffer 420, software must reset the value of the "PEBS Index, Threshold" MSR 406 back to the base physical address of the PEBS buffer 420.

In various embodiments, if software desires to take an interrupt for each PEBS record that is written, it programs the "PEBS Index, Threshold" MSR 406 with the physical address of the first byte of the second PEBS record in the PEBS buffer 420 (PEBS Record 1 in the figure above). In this case, microcode determines that the PEBS interrupt threshold was reached each time a PEBS record is written, and triggers a performance monitoring interrupt (PMI).

In various embodiments, some or all of the MSRs which support PEBS functionality as described herein (e.g., including the configuration of a PEBS output buffer) are of a first MSR type which is to be distinguished from one or more other MSR types of the same processor architecture. In one such embodiment, for any MSR of the first MSR type, the MSR has been designated by a manufacturer as having relatively high priority, as compared to any MSR of some second MSR type, for being supported in any next generation model of the same processor family.

By way of illustration and not limitation, some Intel architectures use register names which start with "IA32" to indicate MSRs which are relatively more likely to be supported across two or more successive processor models. By contrast, such Intel architectures also use register names which start with "MSR" to indicate MSRs which instead are relatively less likely to be so supported across successive processor models. Conventionally, "architectural" is sometimes used to refer to MSRs which are of such a first MSR type - e.g., wherein MSRs of the second MSR type are "non-architectural" MSRs. In this disclosure, MSRs of such a first MSR type are referred to as a having a relatively high "model legacy prioritization" - e.g., wherein MSRs of the second MSR type instead have relatively low model legacy prioritization. High model legacy prioritization and low model legacy prioritization correspond (respectively) to the terms "architectural MSRs" and "non-architectural MSRs," which are sometimes used to distinguish between different processor control registers.

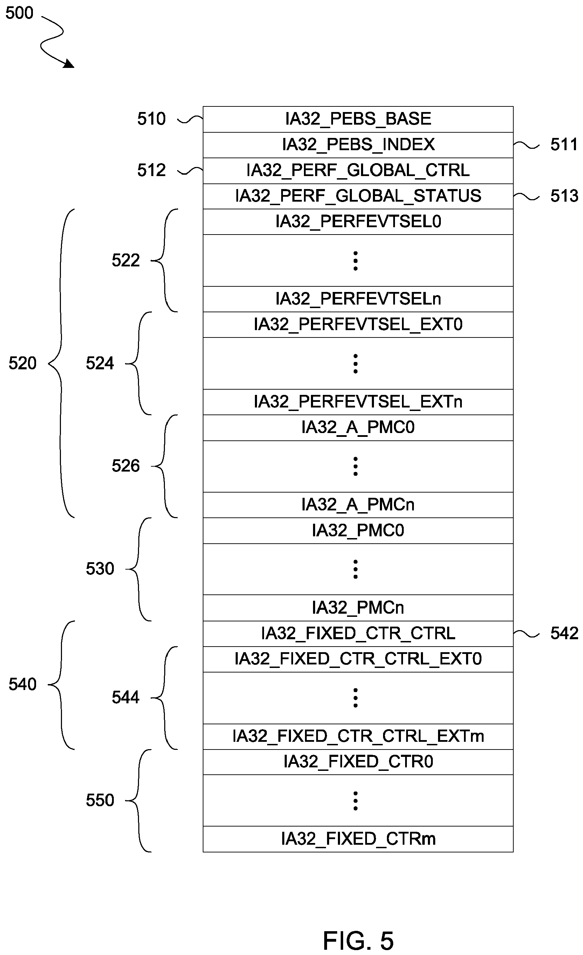

FIG. 5 shows one example of a set of model specific registers 500 which facilitates architectural PEBS according to an embodiment. MSR set 500 illustrates an example of an embodiment which is available for storing one or more physical addresses to enable a configuration and/or other access of a PEBS output buffer (such as the one or more memory buffers 160, the PEBS buffer 212, or the PEBS buffer 420). By way of illustration and not limitation, MSR set 500 is provided with one of MSRs 130A, 130B, 130C, with processor 202, or with device 400 - e.g., wherein one or more operations of method 300 access, or are otherwise based on, MSR set 500.

To illustrate certain features of various embodiments, some of the MSRs 500 are shown as having names which are each similar to that of some respective MSR in an existing processor architecture from Intel Corporation - i.e., an IA-32 processor architecture. As indicated by such similar naming, these registers of MSRs 500 variously provide at least some functionality which is similar to that of their counterparts in the existing processor architecture. However, it is to be appreciated that such functionality is extended or otherwise modified by one or more of these registers, in some embodiments.

In the example embodiment shown, MSR set 500 comprises a MSR 510 (IA32_PEBS_BASE) which is to store a physical address which identifies a location of a PEBS output buffer, where - for example - MSR 510 corresponds functionally to register 404. For example, the physical address identified a start of the PEBS output buffer - e.g., wherein MSR 510 further stores an identifier of size of the PEBS output buffer. In one such embodiment, MSR 510 stores a physical address of a first byte of the output buffer, and an indicator of a physical address of a first byte after the output buffer.

MSR set 500 further comprises a MSR 511 (IA32_PEBS_INDEX) to store a physical address which specifies a location in the output buffer where a next PEBS record is to be stored - e.g., wherein MSR 511 corresponds functionally to register 406. In some embodiments, MSR 511 further stores an identifier of a location in the output buffer which is configured as a threshold level of buffer utilization. For example, in one such embodiment, the identifier includes an address offset - e.g., an offset relative to the base physical address provided in MSR 510.

MSR set 500 further comprises a MSR 512 (IA32_PERF_GLOBAL_CTRL) which allows software to selectively enable (or disable) event counting with any of various combinations of one or more fixed-function performance counters, and one or more general purpose performance counters. In an embodiment, MSR 512 is to enable or disable performance counting features at a global level - e.g., wherein one or more other MSRs are further to variously provide selective enabling (or disabling) each at a respective local level. For example, MSR 512 comprises control bits which each correspond to a different respective performance counter (e.g., including general function counters, and fixed function counters). If a given one such control bit is set to some particular value (e.g., 0), then all other control register programming for the corresponding counter will be ignored and the counter will not count.

MSR set 500 further comprises a MSR 513 (IA32_PERF_GLOBAL_STATUS) to indicate the status of one or more PEBS characteristics. In various embodiments, MSR 513 comprises bits which each correspond to a different respective performance counter (e.g., including general function counters, and fixed function counters), where each such bit indicates whether or not the corresponding performance counter is currently in an overflow state. Additionally or alternatively, MSR 513 comprises a bit to indicate whether a threshold utilization level of the PEBS output buffer has been reached.

In various embodiments, PEBS functionality is provided with two sets of event counters: fixed function counters and general-purpose counters. For example, fixed function counters are variously dedicated each to count instances of a respective predetermined event type - e.g., including one of an instruction retirement event, a reference clock cycle event, a core clock cycle event and/or the like. By contrast, general-purpose counters are available to be configured for counting instances of any one of various event types.

To facilitate such functionality, MSR set 500 further comprises (n+1) MSRs 530 (IA32_PMC0,..., IA32_PMCn) - where n is a positive integer - which are each to function as a respective general purpose performance counter. MSR set 500 further comprises multiple MSRs 520 which are to variously configure performance counting with the (n+1) MSRs 530. By way of illustration and not limitation, MSRs 520 comprise a first (n+1) MSRs 522 (IA32_PERFEVTSEL0,..., IA32 _PERFEVTSELn), in addition to a second (n+1) MSRs 524 (IA32_PERFEVTSEL_EXT0,..., IA32_PERFEVTSEL_EXTn), as well as a third (n+1) MSRs 526 (IA32_A_PMC0,..., IA32_A_PMCn).

In one such embodiment, a given register IA32_PERFEVTSELx of MSRs 522 corresponds to a register IA32_PMCx of MSRs 530 (wherein the index "x" is one of 0 through n). The given register IA32_PERFEVTSELx provides an interface for software to select a respective event to be counted using the corresponding register IA32_PMCx of MSRs 530. For example, the register IA32_PERFEVTSELx stores a bit to locally enable/disable counting with the corresponding register IA32_PMCx of MSRs 530. In some embodiments, the given register IA32_PERFEVTSELx is further to configure one or more constraints under which the respective event is counted. By way of illustration and not limitation, the register IA32_PERFEVTSELx is to store a value which specifies whether (or not) the respective event is to be counted only when the logical processor in question is operating at a particular one or more privilege levels.

Furthermore, a given register IA32_PERFEVTSEL_EXTx of MSRs 524 corresponds to a register IA32_PMCx of MSRs 530 (wherein the index "x" is one of 0 through n). In various embodiments, MSRs 524 provide functionality such as that of registers 408, ..., 410. For example, as described herein, the given register IA32_PERFEVTSEL _EXTx supports programming or other configuration to determine what information to be included in a PEBS record in the event of an overflow by a general-purpose counter which is provided with the corresponding register IA32_PMCx. Further still, a given register IA32_A_PMCx of MSRs 526 corresponds to the register IA32_PMCx of MSRs 530 (wherein the index "x" is one of 0 through n). In various embodiments, the given register IA32_A_PMCx is to provide an alias address to access IA32_PMCx.

In an embodiment, MSR set 500 further comprises (m+1) MSRs 550 (IA32_FIXED_CTR0, ..., IA32_FIXED_CTRm) - where m is a positive integer - which are each to function as a respective fixed function performance counter. In one such embodiment, MSR set 500 further comprises multiple MSRs 540 which are to variously configure performance counting with the (m+1) MSRs 550. For example, MSRs 540 comprise a MSR 542 (IA32_FIXED_CTR_CTRL) which, for example, is to determine, for a given one of the fixed function performance counters, whether that counter is enabled to generate performance management interrupts. Additionally or alternatively, MSR 542 is to indicate, for a given fixed function performance counter, whether a given count by that counter is to occur for any instance of an event, or (alternatively) only for instances of the event which occur in a particular thread.

In one such embodiment, MSRs 540 further comprises (m+1) MSRs 544 (IA32_FIXED_CTR_CTRL_EXT0, ..., IA32_FIXED_CTR_CTRL_EXTm) which, for example, provide functionality such as that of registers 412, ... , 414. A given register IA32_FIXED_CTR_CTRL_EXTx of MSRs 544 corresponds to the register IA32_FIXED_CTRx of MSRs 550 (wherein the index "x" is one of 0 through m). As described herein, the given register IA32_FIXED_CTR_CTRL_EXTx supports programming or other configuration to determine what information to be included in a PEBS record in the event of an overflow by a fixed function performance counter which is provided with the corresponding register IA32_FIXED_CTRx.

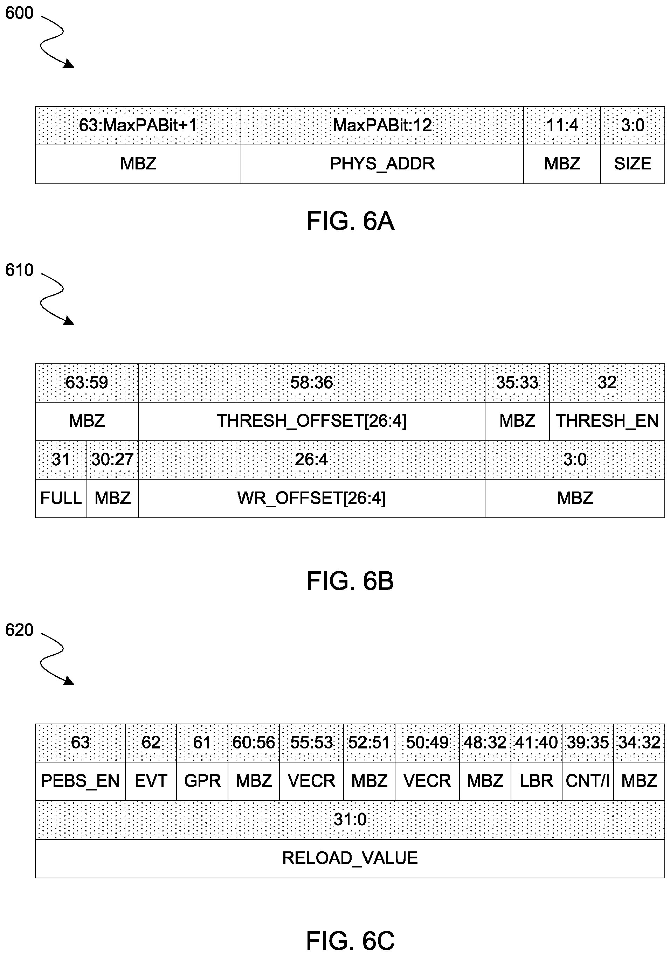

FIG. 6A shows a format of a MSR 600 which is to identify a location of a PEBS output buffer according to an embodiment. For example, MSR 600 corresponds functionally to register 404, or the "IA32_PEBS_BASE" MSR 510, in some embodiments. In MSR 600, a SIZE field is to store a value representing a size of the output buffer, and a PHY_ADDR field is to store some or all bits of a physical address of a memory location where the PEBS output buffer begins. The "MBZ" fields shown for MSR 600 are reserved or otherwise not used (e.g., wherein an MBZ field must include only "0" bits, in some embodiments).

FIG. 6B shows a format of another MSR 610 which is to identify a location where a next PEBS record is to be written to the output buffer, according to an embodiment. For example, MSR 610 corresponds functionally to register 406 or the "IA32_PEBS_INDEX" MSR 511, in some embodiments. In MSR 610, a WR_OFFSET field is to store a value representing a location where a next record is to be buffered - e.g., wherein the value represents an offset from the physical address in the PHY_ADDR field of MSR 600. Although some embodiments are not limited in this regard, MSR 610 further comprises a THRESH_OFFSET field to store a value representing a location in the output buffer which represents a threshold level of utilization (e.g., a threshold number or size of currently buffered PEBS records for triggering an interrupt). In one such embodiment, MSR 610 further comprises a THRESH_EN field to store a control bit which specifies whether the writes to the output buffer are to be controlled based on the threshold level of utilization. Alternatively or in addition, MSR 610 comprises a FULL field to indicate (for example) whether the output buffer is currently at or above its threshold level of utilization. The "MBZ" fields shown for MSR 610 are reserved or otherwise not used, for example.

FIG. 6C shows a format of a MSR 620 which, according to an embodiment, is to determine one or more types of information which are to be included in (or alternatively, excluded from) a PEBS record in the event of an overflow by a performance counter which is provided by another MSR. For example, MSR 620 corresponds functionally to one of MSRs 408,..., 410, one of MSRs 412, 414, one of MSRs 524, or one of MSRs, 544, in some embodiments. In MSR 620, a EVT field is to determine a particular combination of PMC counters to be included when the PEBS record is generated. Furthermore, a GPR field of MSR 620 is to determine whether a general purpose register group is to be included when the PEBS record is generated - e.g., wherein a VECR field is to determine whether a vector register group is to be included. Further still, a LBR field of MSR 620 is to determine whether a last branch register group is to be included when the PEBS record is generated. In one such embodiment, MSR 620 further comprises a CNT/I field which is to store a value which the corresponding counter is to be reset after an overflow of said counter. The "MBZ" fields shown for MSR 620 are reserved or otherwise not used.

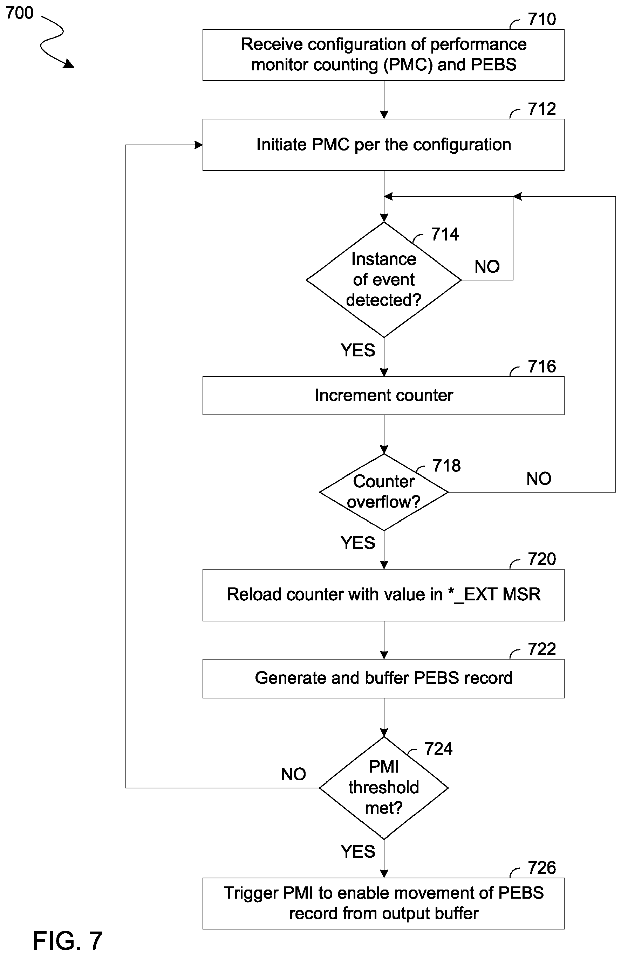

FIG. 7 shows features of a method 700 to perform event-based sampling at a processor, based on a configuration of MSRs according to an embodiment. Method 700 is performed with processor 112, system 200, device 400, or MSR set 500, for example. In one embodiment, method 700 includes or is otherwise based on operations of method 300.

As shown in FIG. 7, method 700 comprises (at 710) receiving a configuration of performance monitor counting (PMC) and processor event-based sampling (PEBS) - e.g., wherein the configuration is determined by a BIOS, microcode and/or other suitable processor logic based on an executing software process. In various embodiments, the receiving at 710 includes or otherwise results in MSRs of the processor being programmed or otherwise configured - e.g., to create a PEBS output buffer and/or otherwise enable PEBS record functionality. In one such embodiment, the MSR configuring comprises storing to one MSR a physical address of a start of the output buffer. Method 700 further comprises (at 712) initiating PMC operations according to the configuration - e.g., wherein the PMC operations are to maintain various event counts each at a different respective MSR.

During the PMC operations, method 700 performs an evaluation (at 714) to determine whether an instance of an event, which is being monitored, has been detected. Where it is determined at 714 that such an event instance has not occurred since a most recent update to the corresponding counter, method 700 performs a next instance of the evaluation at 714. Where it is instead determined at 714 that an event instance has occurred, method 700 (at 716) increments the corresponding counter.

Method 700 further comprises performing an evaluation (at 718) to determine whether the counter which was most recently incremented at 716 has overflowed - e.g., rolled over or otherwise passed some predetermined threshold value. Where it is determined at 718 that no such overflow of the counter has occurred, method 700 performs a next instance of the evaluation at 714. Where it is instead determined at 718 that the counter has overflowed, method 700 (at 720) reloads that counter with a value that, for example, is provided in a corresponding ^{∗}_EXT MSR - e.g., in one of MSRs 408, ..., 410, one of MSRs 412, 414, one of MSRs 524, one of MSRs, 544, or MSR 620. Furthermore, based on the overflow event detected at 718, method 700 generates a PEBS record (at 722), which includes a sampled state of the processor, and sends the PEBS record to the output buffer. In an embodiment, buffering of the PEBS record is based on a MSR which stores a physical address of a next location in the output buffer which is to receive such a record.

Method 700 further comprises performing an evaluation (at 724) to determine whether a performance management interrupt (PMI) threshold has been met by a current level of utilization of the PEBS output buffer. Where it is determined at 724 that the PMI threshold is not met, method 700 performs a next instance of the initiating at 712. Where it is instead determined at 724 that the PMI threshold has been met, method 700 (at 726) triggers a PMI - and, in some embodiments, stops performance counting - to enable movement of one or more PEBS records from the output buffer.

The figures described herein detail exemplary architectures and systems to implement embodiments of the above. In some embodiments, one or more hardware components and/or instructions described herein are emulated as detailed below or implemented as software modules.

Embodiments of the instruction(s) detailed above are embodied may be embodied in a "generic vector friendly instruction format" which is detailed herein. In other embodiments, such a format is not utilized and another instruction format is used, however, the description herein of the writemask registers, various data transformations (swizzle, broadcast, etc.), addressing, etc. is generally applicable to the description of the embodiments of the instruction(s) above. Additionally, exemplary systems, architectures, and pipelines are detailed herein. Embodiments of the instruction(s) above may be executed on such systems, architectures, and pipelines, but are not limited to those detailed.

An instruction set may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or subformats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. A set of SIMD extensions referred to as the Advanced Vector Extensions (AVX) (AVX1 and AVX2) and using the Vector Extensions (VEX) coding scheme has been released and/or published (e.g., see Intel® 64 and IA-32 Architectures Software Developer's Manual, September 2014; and see Intel® Advanced Vector Extensions Programming Reference, October 2014).

### Exemplary Instruction Formats

Embodiments of the instruction(s) described herein may be embodied in different formats. Additionally, exemplary systems, architectures, and pipelines are detailed herein. Embodiments of the instruction(s) may be executed on such systems, architectures, and pipelines, but are not limited to those detailed.

### Generic Vector Friendly Instruction Format

A vector friendly instruction format is an instruction format that is suited for vector instructions (e.g., there are certain fields specific to vector operations). While embodiments are described in which both vector and scalar operations are supported through the vector friendly instruction format, alternative embodiments use only vector operations the vector friendly instruction format.

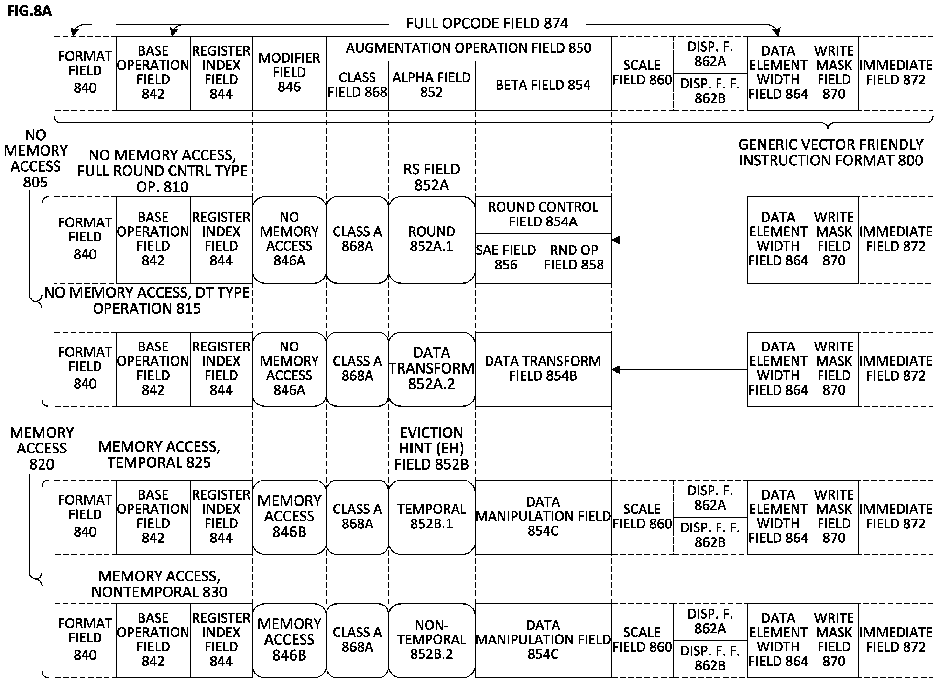

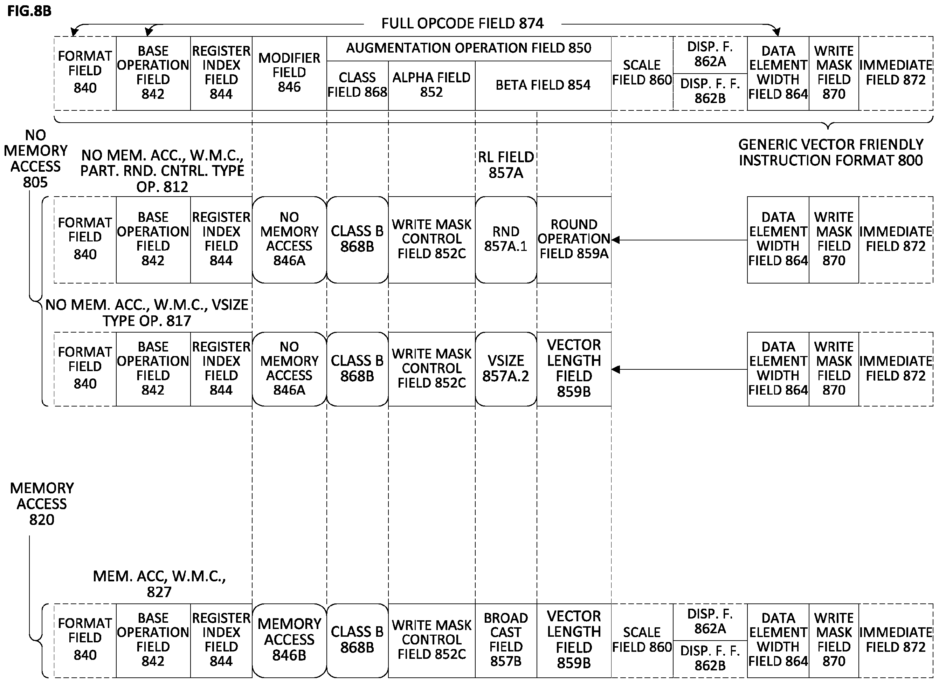

FIGs. 8A through 8B are block diagrams illustrating a generic vector friendly instruction format and instruction templates thereof according to embodiments of the invention. FIG. 8A is a block diagram illustrating a generic vector friendly instruction format and class A instruction templates thereof according to embodiments of the invention; while FIG. 8B is a block diagram illustrating the generic vector friendly instruction format and class B instruction templates thereof according to embodiments of the invention. Specifically, a generic vector friendly instruction format 800 for which are defined class A and class B instruction templates, both of which include no memory access 805 instruction templates and memory access 820 instruction templates. The term generic in the context of the vector friendly instruction format refers to the instruction format not being tied to any specific instruction set.

While embodiments of the invention will be described in which the vector friendly instruction format supports the following: a 64 byte vector operand length (or size) with 32 bit (4 byte) or 64 bit (8 byte) data element widths (or sizes) (and thus, a 64 byte vector consists of either 16 doubleword-size elements or alternatively, 8 quadword-size elements); a 64 byte vector operand length (or size) with 16 bit (2 byte) or 8 bit (1 byte) data element widths (or sizes); a 32 byte vector operand length (or size) with 32 bit (4 byte), 64 bit (8 byte), 16 bit (2 byte), or 8 bit (1 byte) data element widths (or sizes); and a 16 byte vector operand length (or size) with 32 bit (4 byte), 64 bit (8 byte), 16 bit (2 byte), or 8 bit (1 byte) data element widths (or sizes); alternative embodiments may support more, less and/or different vector operand sizes (e.g., 256 byte vector operands) with more, less, or different data element widths (e.g., 128 bit (16 byte) data element widths).

The class A instruction templates in FIG. 8A include: 1) within the no memory access 805 instruction templates there is shown a no memory access, full round control type operation 810 instruction template and a no memory access, data transform type operation 815 instruction template; and 2) within the memory access 820 instruction templates there is shown a memory access, temporal 825 instruction template and a memory access, non-temporal 830 instruction template. The class B instruction templates in FIG. 8B include: 1) within the no memory access 805 instruction templates there is shown a no memory access, write mask control, partial round control type operation 812 instruction template and a no memory access, write mask control, vsize type operation 817 instruction template; and 2) within the memory access 820 instruction templates there is shown a memory access, write mask control 827 instruction template.

The generic vector friendly instruction format 800 includes the following fields listed herein in the order illustrated in FIGs. 8A through 8B.

Format field 840 - a specific value (an instruction format identifier value) in this field uniquely identifies the vector friendly instruction format, and thus occurrences of instructions in the vector friendly instruction format in instruction streams. As such, this field is optional in the sense that it is not needed for an instruction set that has only the generic vector friendly instruction format.

Base operation field 842 - its content distinguishes different base operations.

Register index field 844 - its content, directly or through address generation, specifies the locations of the source and destination operands, be they in registers or in memory. These include a sufficient number of bits to select N registers from a PxQ (e.g. 32×512, 16×128, 32×1024, 64×1024) register file. While in one embodiment N may be up to three sources and one destination register, alternative embodiments may support more or less sources and destination registers (e.g., may support up to two sources where one of these sources also acts as the destination, may support up to three sources where one of these sources also acts as the destination, may support up to two sources and one destination).

Modifier field 846 - its content distinguishes occurrences of instructions in the generic vector instruction format that specify memory access from those that do not; that is, between no memory access 805 instruction templates and memory access 820 instruction templates (e.g., no memory access 846A and memory access 846B for the class field 846 respectively in FIGs. 8A-B). Memory access operations read and/or write to the memory hierarchy (in some cases specifying the source and/or destination addresses using values in registers), while non-memory access operations do not (e.g., the source and destinations are registers). While in one embodiment this field also selects between three different ways to perform memory address calculations, alternative embodiments may support more, less, or different ways to perform memory address calculations.

Augmentation operation field 850 - its content distinguishes which one of a variety of different operations to be performed in addition to the base operation. This field is context specific. In one embodiment of the invention, this field is divided into a class field 868, an alpha field 852, and a beta field 854. The augmentation operation field 850 allows common groups of operations to be performed in a single instruction rather than 2, 3, or 4 instructions.

Scale field 860 - its content allows for the scaling of the index field's content for memory address generation (e.g., for address generation that uses 2scale ^{∗} index + base).

Displacement Field 862A- its content is used as part of memory address generation (e.g., for address generation that uses 2scale ^{∗} index + base + displacement).

Displacement Factor Field 862B (note that the juxtaposition of displacement field 862A directly over displacement factor field 862B indicates one or the other is used) - its content is used as part of address generation; it specifies a displacement factor that is to be scaled by the size of a memory access (N) - where N is the number of bytes in the memory access (e.g., for address generation that uses 2scale ^{∗} index + base + scaled displacement). Redundant low-order bits are ignored and hence, the displacement factor field's content is multiplied by the memory operands total size (N) in order to generate the final displacement to be used in calculating an effective address. The value of N is determined by the processor hardware at runtime based on the full opcode field 874 (described later herein) and the data manipulation field 854C. The displacement field 862A and the displacement factor field 862B are optional in the sense that they are not used for the no memory access 805 instruction templates and/or different embodiments may implement only one or none of the two.

Data element width field 864 - its content distinguishes which one of a number of data element widths is to be used (in some embodiments for all instructions; in other embodiments for only some of the instructions). This field is optional in the sense that it is not needed if only one data element width is supported and/or data element widths are supported using some aspect of the opcodes.

Write mask field 870 - its content controls, on a per data element position basis, whether that data element position in the destination vector operand reflects the result of the base operation and augmentation operation. Class A instruction templates support merging-writemasking, while class B instruction templates support both merging- and zeroing-writemasking. When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the write mask field 870 allows for partial vector operations, including loads, stores, arithmetic, logical, etc. While embodiments of the invention are described in which the write mask field's 870 content selects one of a number of write mask registers that contains the write mask to be used (and thus the write mask field's 870 content indirectly identifies that masking to be performed), alternative embodiments instead or additional allow the write mask field's 870 content to directly specify the masking to be performed.

Immediate field 872 - its content allows for the specification of an immediate. This field is optional in the sense that is it not present in an implementation of the generic vector friendly format that does not support immediate and it is not present in instructions that do not use an immediate.

Class field 868 - its content distinguishes between different classes of instructions. With reference to FIGs. 8A-B, the contents of this field select between class A and class B instructions. In FIGs. 8A-B, rounded corner squares are used to indicate a specific value is present in a field (e.g., class A 868A and class B 868B for the class field 868 respectively in FIGs. 8A-B).

### Instruction Templates of Class A

In the case of the non-memory access 805 instruction templates of class A, the alpha field 852 is interpreted as an RS field 852A, whose content distinguishes which one of the different augmentation operation types are to be performed (e.g., round 852A.1 and data transform 852A.2 are respectively specified for the no memory access, round type operation 810 and the no memory access, data transform type operation 815 instruction templates), while the beta field 854 distinguishes which of the operations of the specified type is to be performed. In the no memory access 805 instruction templates, the scale field 860, the displacement field 862A, and the displacement scale filed 862B are not present.

### No-Memory Access Instruction Templates - Full Round Control Type Operation

In the no memory access full round control type operation 810 instruction template, the beta field 854 is interpreted as a round control field 854A, whose content(s) provide static rounding. While in the described embodiments of the invention the round control field 854A includes a suppress all floating point exceptions (SAE) field 856 and a round operation control field 858, alternative embodiments may support may encode both these concepts into the same field or only have one or the other of these concepts/fields (e.g., may have only the round operation control field 858).

SAE field 856 - its content distinguishes whether or not to disable the exception event reporting; when the SAE field's 856 content indicates suppression is enabled, a given instruction does not report any kind of floating-point exception flag and does not raise any floating point exception handler.

Round operation control field 858 - its content distinguishes which one of a group of rounding operations to perform (e.g., Round-up, Round-down, Round-towards-zero and Round-to-nearest). Thus, the round operation control field 858 allows for the changing of the rounding mode on a per instruction basis. In one embodiment of the invention where a processor includes a control register for specifying rounding modes, the round operation control field's 858 content overrides that register value.

### No Memory Access Instruction Templates - Data Transform Type Operation

In the no memory access data transform type operation 815 instruction template, the beta field 854 is interpreted as a data transform field 854B, whose content distinguishes which one of a number of data transforms is to be performed (e.g., no data transform, swizzle, broadcast).

In the case of a memory access 820 instruction template of class A, the alpha field 852 is interpreted as an eviction hint field 852B, whose content distinguishes which one of the eviction hints is to be used (in FIG. 8A, temporal 852B.1 and non-temporal 852B.2 are respectively specified for the memory access, temporal 825 instruction template and the memory access, non-temporal 830 instruction template), while the beta field 854 is interpreted as a data manipulation field 854C, whose content distinguishes which one of a number of data manipulation operations (also known as primitives) is to be performed (e.g., no manipulation; broadcast; up conversion of a source; and down conversion of a destination). The memory access 820 instruction templates include the scale field 860, and optionally the displacement field 862A or the displacement scale field 862B.

Vector memory instructions perform vector loads from and vector stores to memory, with conversion support. As with regular vector instructions, vector memory instructions transfer data from/to memory in a data element-wise fashion, with the elements that are actually transferred is dictated by the contents of the vector mask that is selected as the write mask.

### Memory Access Instruction Templates - Temporal

Temporal data is data likely to be reused soon enough to benefit from caching. This is, however, a hint, and different processors may implement it in different ways, including ignoring the hint entirely.

### Memory Access Instruction Templates - Non-Temporal

Non-temporal data is data unlikely to be reused soon enough to benefit from caching in the 1st-level cache and should be given priority for eviction. This is, however, a hint, and different processors may implement it in different ways, including ignoring the hint entirely.

### Instruction Templates of Class B

In the case of the instruction templates of class B, the alpha field 852 is interpreted as a write mask control (Z) field 852C, whose content distinguishes whether the write masking controlled by the write mask field 870 should be a merging or a zeroing.

In the case of the non-memory access 805 instruction templates of class B, part of the beta field 854 is interpreted as an RL field 857A, whose content distinguishes which one of the different augmentation operation types are to be performed (e.g., round 857A.1 and vector length (VSIZE) 857A.2 are respectively specified for the no memory access, write mask control, partial round control type operation 812 instruction template and the no memory access, write mask control, VSIZE type operation 817 instruction template), while the rest of the beta field 854 distinguishes which of the operations of the specified type is to be performed. In the no memory access 805 instruction templates, the scale field 860, the displacement field 862A, and the displacement scale filed 862B are not present.

In the no memory access, write mask control, partial round control type operation 812 instruction template, the rest of the beta field 854 is interpreted as a round operation field 859A and exception event reporting is disabled (a given instruction does not report any kind of floating-point exception flag and does not raise any floating point exception handler).

Round operation control field 859A - just as round operation control field 858, its content distinguishes which one of a group of rounding operations to perform (e.g., Round-up, Round-down, Round-towards-zero and Round-to-nearest). Thus, the round operation control field 859A allows for the changing of the rounding mode on a per instruction basis. In one embodiment of the invention where a processor includes a control register for specifying rounding modes, the round operation control field's 858 content overrides that register value.

In the no memory access, write mask control, VSIZE type operation 817 instruction template, the rest of the beta field 854 is interpreted as a vector length field 859B, whose content distinguishes which one of a number of data vector lengths is to be performed on (e.g., 128, 256, or 512 byte).

In the case of a memory access 820 instruction template of class B, part of the beta field 854 is interpreted as a broadcast field 857B, whose content distinguishes whether or not the broadcast type data manipulation operation is to be performed, while the rest of the beta field 854 is interpreted the vector length field 859B. The memory access 820 instruction templates include the scale field 860, and optionally the displacement field 862A or the displacement scale field 862B.

With regard to the generic vector friendly instruction format 800, a full opcode field 874 is shown including the format field 840, the base operation field 842, and the data element width field 864. While one embodiment is shown where the full opcode field 874 includes all of these fields, the full opcode field 874 includes less than all of these fields in embodiments that do not support all of them. The full opcode field 874 provides the operation code (opcode).

The augmentation operation field 850, the data element width field 864, and the write mask field 870 allow these features to be specified on a per instruction basis in the generic vector friendly instruction format.

The combination of write mask field and data element width field create typed instructions in that they allow the mask to be applied based on different data element widths.

The various instruction templates found within class A and class B are beneficial in different situations. In some embodiments of the invention, different processors or different cores within a processor may support only class A, only class B, or both classes. For instance, a high performance general purpose out-of-order core intended for general-purpose computing may support only class B, a core intended primarily for graphics and/or scientific (throughput) computing may support only class A, and a core intended for both may support both (of course, a core that has some mix of templates and instructions from both classes but not all templates and instructions from both classes is within the purview of the invention). Also, a single processor may include multiple cores, all of which support the same class or in which different cores support different class. For instance, in a processor with separate graphics and general purpose cores, one of the graphics cores intended primarily for graphics and/or scientific computing may support only class A, while one or more of the general purpose cores may be high performance general purpose cores with out of order execution and register renaming intended for general-purpose computing that support only class B. Another processor that does not have a separate graphics core, may include one more general purpose in-order or out-of-order cores that support both class A and class B. Of course, features from one class may also be implement in the other class in different embodiments of the invention. Programs written in a high level language would be put (e.g., just in time compiled or statically compiled) into an variety of different executable forms, including: 1) a form having only instructions of the class(es) supported by the target processor for execution; or 2) a form having alternative routines written using different combinations of the instructions of all classes and having control flow code that selects the routines to execute based on the instructions supported by the processor which is currently executing the code.

### Exemplary Specific Vector Friendly Instruction Format

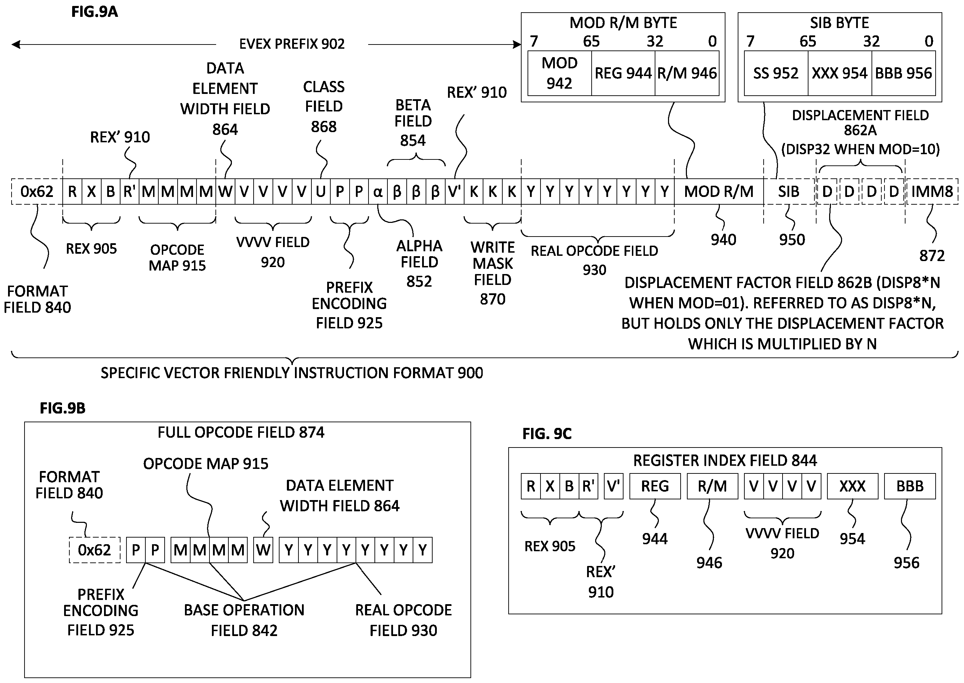

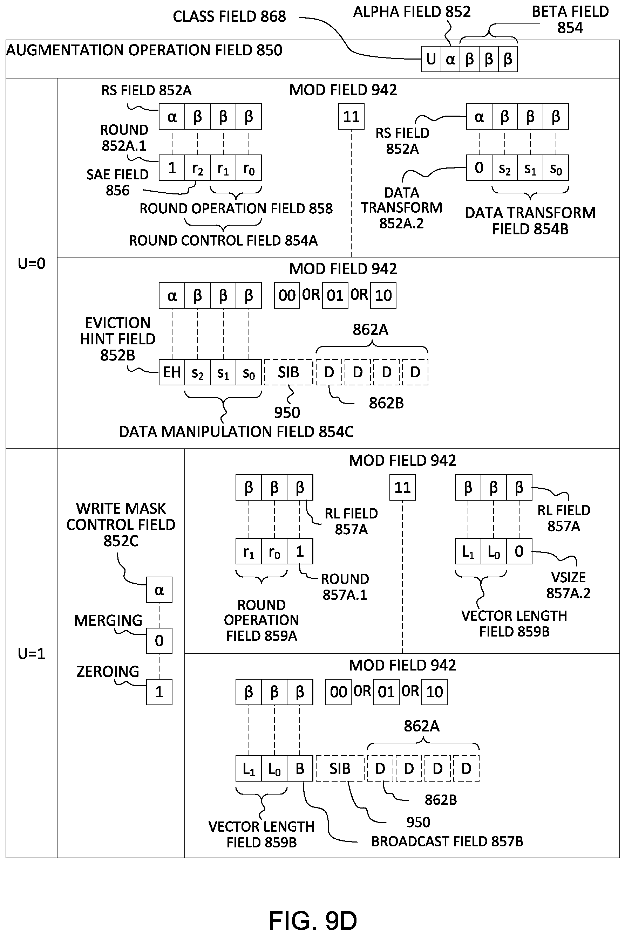

FIG. 9 is a block diagram illustrating an exemplary specific vector friendly instruction format according to embodiments of the invention. FIG. 9 shows a specific vector friendly instruction format 900 that is specific in the sense that it specifies the location, size, interpretation, and order of the fields, as well as values for some of those fields. The specific vector friendly instruction format 900 may be used to extend the x86 instruction set, and thus some of the fields are similar or the same as those used in the existing x86 instruction set and extension thereof (e.g., AVX). This format remains consistent with the prefix encoding field, real opcode byte field, MOD R/M field, SIB field, displacement field, and immediate fields of the existing x86 instruction set with extensions. The fields from FIG. 8 into which the fields from FIG. 9 map are illustrated.

It should be understood that, although embodiments of the invention are described with reference to the specific vector friendly instruction format 900 in the context of the generic vector friendly instruction format 800 for illustrative purposes, the invention is not limited to the specific vector friendly instruction format 900 except where claimed. For example, the generic vector friendly instruction format 800 contemplates a variety of possible sizes for the various fields, while the specific vector friendly instruction format 900 is shown as having fields of specific sizes. By way of specific example, while the data element width field 864 is illustrated as a one bit field in the specific vector friendly instruction format 900, the invention is not so limited (that is, the generic vector friendly instruction format 800 contemplates other sizes of the data element width field 864).

The specific vector friendly instruction format 900 includes the following fields listed herein in the order illustrated in FIG. 9A.

EVEX Prefix (Bytes 0-3) 902 - is encoded in a four-byte form.

Format Field 840 (EVEX Byte 0, bits [7:0]) - the first byte (EVEX Byte 0) is the format field 840 and it contains 0x62 (the unique value used for distinguishing the vector friendly instruction format in one embodiment of the invention).

The second-fourth bytes (EVEX Bytes 1-3) include a number of bit fields providing specific capability.

REX field 905 (EVEX Byte 1, bits [7-5]) - consists of a EVEX.R bit field (EVEX Byte 1, bit [7] - R), EVEX.X bit field (EVEX byte 1, bit [6] - X), and 857BEX byte 1, bit[5] - B). The EVEX.R, EVEX.X, and EVEX.B bit fields provide the same functionality as the corresponding VEX bit fields, and are encoded using 1s complement form, i.e. ZMM0 is encoded as 1111B, ZMM15 is encoded as 0000B. Other fields of the instructions encode the lower three bits of the register indexes as is known in the art (rrr, xxx, and bbb), so that Rrrr, Xxxx, and Bbbb may be formed by adding EVEX.R, EVEX.X, and EVEX.B.

REX' field 910 - this is the first part of the REX' field 910 and is the EVEX.R' bit field (EVEX Byte 1, bit [4] - R') that is used to encode either the upper 16 or lower 16 of the extended 32 register set. In one embodiment of the invention, this bit, along with others as indicated herein, is stored in bit inverted format to distinguish (in the well-known x86 32-bit mode) from the BOUND instruction, whose real opcode byte is 62, but does not accept in the MOD R/M field (described herein) the value of 11 in the MOD field; alternative embodiments of the invention do not store this and the other indicated bits herein in the inverted format. A value of 1 is used to encode the lower 16 registers. In other words, R'Rrrr is formed by combining EVEX.R', EVEX.R, and the other RRR from other fields.

Opcode map field 915 (EVEX byte 1, bits [3:0] - mmmm) - its content encodes an implied leading opcode byte (0F, 0F 38, or 0F 3).

Data element width field 864 (EVEX byte 2, bit [7] - W) - is represented by the notation EVEX.W. EVEX.W is used to define the granularity (size) of the datatype (either 32-bit data elements or 64-bit data elements).

EVEX.ww 920 (EVEX Byte 2, bits [6:3]-ww)- the role of EVEX.vvvv may include the following: 1) EVEX.vwv encodes the first source register operand, specified in inverted (1s complement) form and is valid for instructions with 2 or more source operands; 2) EVEX.ww encodes the destination register operand, specified in 1s complement form for certain vector shifts; or 3) EVEX.ww does not encode any operand, the field is reserved and should contain 111 1b. Thus, EVEX.ww field 920 encodes the 4 low-order bits of the first source register specifier stored in inverted (1s complement) form. Depending on the instruction, an extra different EVEX bit field is used to extend the specifier size to 32 registers.

EVEX.U 868 Class field (EVEX byte 2, bit [2]-U) - If EVEX.U = 0, it indicates class A or EVEX.U0; if EVEX.U = 1, it indicates class B or EVEX.U1.

Prefix encoding field 925 (EVEX byte 2, bits [1:0]-pp) - provides additional bits for the base operation field. In addition to providing support for the legacy SSE instructions in the EVEX prefix format, this also has the benefit of compacting the SIMD prefix (rather than requiring a byte to express the SIMD prefix, the EVEX prefix requires only 2 bits). In one embodiment, to support legacy SSE instructions that use a SIMD prefix (66H, F2H, F3H) in both the legacy format and in the EVEX prefix format, these legacy SIMD prefixes are encoded into the SIMD prefix encoding field; and at runtime are expanded into the legacy SIMD prefix prior to being provided to the decoder's PLA (so the PLA can execute both the legacy and EVEX format of these legacy instructions without modification). Although newer instructions could use the EVEX prefix encoding field's content directly as an opcode extension, certain embodiments expand in a similar fashion for consistency but allow for different meanings to be specified by these legacy SIMD prefixes. An alternative embodiment may redesign the PLA to support the 2 bit SIMD prefix encodings, and thus not require the expansion.

Alpha field 852 (EVEX byte 3, bit [7] - EH; also known as EVEX.EH, EVEX.rs, EVEX.RL, EVEX. write mask control, and EVEX.N; also illustrated with α) - as previously described, this field is context specific.

Beta field 854 (EVEX byte 3, bits [6:4]-SSS, also known as EVEX.s2-0, EVEX.r2-0, EVEX.rr1, EVEX.LL0, EVEX.LLB; also illustrated with βββ) - as previously described, this field is context specific.

REX' field 910 - this is the remainder of the REX' field and is the EVEX. V' bit field (EVEX Byte 3, bit [3] - V') that may be used to encode either the upper 16 or lower 16 of the extended 32 register set. This bit is stored in bit inverted format. A value of 1 is used to encode the lower 16 registers. In other words, V'VVVV is formed by combining EVEX.V', EVEX.vvw.

Write mask field 870 (EVEX byte 3, bits [2:0]-kkk) - its content specifies the index of a register in the write mask registers as previously described. In one embodiment of the invention, the specific value EVEX.kkk=000 has a special behavior implying no write mask is used for the particular instruction (this may be implemented in a variety of ways including the use of a write mask hardwired to all ones or hardware that bypasses the masking hardware).

Real Opcode Field 930 (Byte 4) is also known as the opcode byte. Part of the opcode is specified in this field.

MOD R/M Field 940 (Byte 5) includes MOD field 942, Reg field 944, and R/M field 946. As previously described, the MOD field's 942 content distinguishes between memory access and non-memory access operations. The role of Reg field 944 can be summarized to two situations: encoding either the destination register operand or a source register operand, or be treated as an opcode extension and not used to encode any instruction operand. The role of R/M field 946 may include the following: encoding the instruction operand that references a memory address, or encoding either the destination register operand or a source register operand.

Scale, Index, Base (SIB) Byte 950 (Byte 6) - As previously described, the scale field's 860 content is used for memory address generation. SIB.SS 952, SIB.xxx 954 and SIB.bbb 956 - the contents of these fields have been previously referred to with regard to the register indexes Xxxx and Bbbb.

Displacement field 862A (Bytes 7-10) - when MOD field 942 contains 10, bytes 7-10 are the displacement field 862A, and it works the same as the legacy 32-bit displacement (disp32) and works at byte granularity.

Displacement factor field 862B (Byte 7) - when MOD field 942 contains 01, byte 7 is the displacement factor field 862B. The location of this field is that same as that of the legacy x86 instruction set 8-bit displacement (disp8), which works at byte granularity. Since disp8 is sign extended, it can only address between -128 and 127 bytes offsets; in terms of 64 byte cache lines, disp8 uses 8 bits that can be set to only four really useful values -128, -64, 0, and 64; since a greater range is often needed, disp32 is used; however, disp32 requires 4 bytes. In contrast to disp8 and disp32, the displacement factor field 862B is a reinterpretation of disp8; when using displacement factor field 862B, the actual displacement is determined by the content of the displacement factor field multiplied by the size of the memory operand access (N). This type of displacement is referred to as disp8^{∗}N. This reduces the average instruction length (a single byte of used for the displacement but with a much greater range). Such compressed displacement is based on the assumption that the effective displacement is multiple of the granularity of the memory access, and hence, the redundant low-order bits of the address offset do not need to be encoded. In other words, the displacement factor field 862B substitutes the legacy x86 instruction set 8-bit displacement. Thus, the displacement factor field 862B is encoded the same way as an x86 instruction set 8-bit displacement (so no changes in the ModRM/SIB encoding rules) with the only exception that disp8 is overloaded to disp8^{∗}N. In other words, there are no changes in the encoding rules or encoding lengths but only in the interpretation of the displacement value by hardware (which needs to scale the displacement by the size of the memory operand to obtain a byte-wise address offset). Immediate field 872 operates as previously described.

### Full Opcode Field

FIG. 9B is a block diagram illustrating the fields of the specific vector friendly instruction format 900 that make up the full opcode field 874 according to one embodiment of the invention. Specifically, the full opcode field 874 includes the format field 840, the base operation field 842, and the data element width (W) field 864. The base operation field 842 includes the prefix encoding field 925, the opcode map field 915, and the real opcode field 930.

### Register Index Field

FIG. 9C is a block diagram illustrating the fields of the specific vector friendly instruction format 900 that make up the register index field 844 according to one embodiment of the invention. Specifically, the register index field 844 includes the REX field 905, the REX' field 910, the MODR/M.reg field 944, the MODR/M.r/m field 946, the VVW field 920, xxx field 954, and the bbb field 956.

### Augmentation Operation Field

FIG. 9D is a block diagram illustrating the fields of the specific vector friendly instruction format 900 that make up the augmentation operation field 850 according to one embodiment of the invention. When the class (U) field 868 contains 0, it signifies EVEX.U0 (class A 868A); when it contains 1, it signifies EVEX.U1 (class B 868B). When U=0 and the MOD field 942 contains 11 (signifying a no memory access operation), the alpha field 852 (EVEX byte 3, bit [7] - EH) is interpreted as the rs field 852A. When the rs field 852A contains a 1 (round 852A.1), the beta field 854 (EVEX byte 3, bits [6:4]- SSS) is interpreted as the round control field 854A. The round control field 854A includes a one bit SAE field 856 and a two bit round operation field 858. When the rs field 852A contains a 0 (data transform 852A.2), the beta field 854 (EVEX byte 3, bits [6:4]- SSS) is interpreted as a three bit data transform field 854B. When U=0 and the MOD field 942 contains 00, 01, or 10 (signifying a memory access operation), the alpha field 852 (EVEX byte 3, bit [7] - EH) is interpreted as the eviction hint (EH) field 852B and the beta field 854 (EVEX byte 3, bits [6:4]- SSS) is interpreted as a three bit data manipulation field 854C.

When U=1, the alpha field 852 (EVEX byte 3, bit [7] - EH) is interpreted as the write mask control (Z) field 852C. When U=1 and the MOD field 942 contains 11 (signifying a no memory access operation), part of the beta field 854 (EVEX byte 3, bit [4]- S0) is interpreted as the RL field 857A; when it contains a 1 (round 857A. 1) the rest of the beta field 854 (EVEX byte 3, bit [6-5]- S2-1) is interpreted as the round operation field 859A, while when the RL field 857A contains a 0 (VSIZE 857.A2) the rest of the beta field 854 (EVEX byte 3, bit [6-5]- S2-1) is interpreted as the vector length field 859B (EVEX byte 3, bit [6-5]- L1-0). When U=1 and the MOD field 942 contains 00, 01, or 10 (signifying a memory access operation), the beta field 854 (EVEX byte 3, bits [6:4]- SSS) is interpreted as the vector length field 859B (EVEX byte 3, bit [6-5]- L1-0) and the broadcast field 857B (EVEX byte 3, bit [4]- B).

### Exemplary Register Architecture

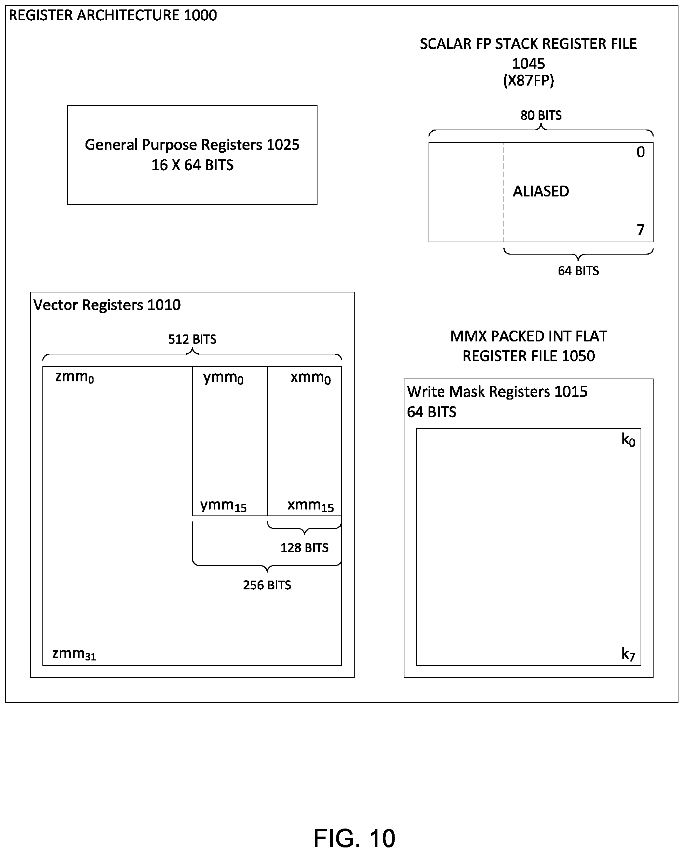

FIG. 10 is a block diagram of a register architecture 1000 according to one embodiment of the invention. In the embodiment illustrated, there are 32 vector registers 1010 that are 512 bits wide; these registers are referenced as zmm0 through zmm31. The lower order 256 bits of the lower 16 zmm registers are overlaid on registers ymm0-16. The lower order 128 bits of the lower 16 zmm registers (the lower order 128 bits of the ymm registers) are overlaid on registers xmm0-15. The specific vector friendly instruction format 900 operates on these overlaid register file as illustrated in the below tables.

| Adjustable Vector Length | Class | Operations | Registers |
|---|---|---|---|
| Instruction Templates that do not include the vector length field 859B | A (FIG. 8A; U=0) | 810, 815, 825, 830 | zmm registers (the vector length is 64 byte) |
| | B (FIG. 8B; U=1) | 812 | zmm registers (the vector length is 64 byte) |
| Instruction templates that do include the vector length field 859B | B (FIG. 8B; U=1) | 817, 827 | zmm, ymm, or xmm registers (the vector length is 64 byte, 32 byte, or 16 byte) depending on the vector length field 859B |

In other words, the vector length field 859B selects between a maximum length and one or more other shorter lengths, where each such shorter length is half the length of the preceding length; and instructions templates without the vector length field 859B operate on the maximum vector length. Further, in one embodiment, the class B instruction templates of the specific vector friendly instruction format 900 operate on packed or scalar single/double-precision floating point data and packed or scalar integer data. Scalar operations are operations performed on the lowest order data element position in an zmm/ymm/xmm register; the higher order data element positions are either left the same as they were prior to the instruction or zeroed depending on the embodiment.

Write mask registers 1015 - in the embodiment illustrated, there are 8 write mask registers (k0 through k7), each 64 bits in size. In an alternate embodiment, the write mask registers 1015 are 16 bits in size. As previously described, in one embodiment of the invention, the vector mask register k0 cannot be used as a write mask; when the encoding that would normally indicate k0 is used for a write mask, it selects a hardwired write mask of 0xFFFF, effectively disabling write masking for that instruction.

General-purpose registers 1025 - in the embodiment illustrated, there are sixteen 64-bit general-purpose registers that are used along with the existing x86 addressing modes to address memory operands. These registers are referenced by the names RAX, RBX, RCX, RDX, RBP, RSI, RDI, RSP, and R8 through R15.

Scalar floating point stack register file (x87 stack) 1045, on which is aliased the MMX packed integer flat register file 1050 - in the embodiment illustrated, the x87 stack is an eight-element stack used to perform scalar floating-point operations on 32/64/80-bit floating point data using the x87 instruction set extension; while the MMX registers are used to perform operations on 64-bit packed integer data, as well as to hold operands for some operations performed between the MMX and XMM registers.

Alternative embodiments of the invention may use wider or narrower registers. Additionally, alternative embodiments of the invention may use more, less, or different register files and registers.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

### Exemplary Core Architectures

### In-order and out-of-order core block diagram

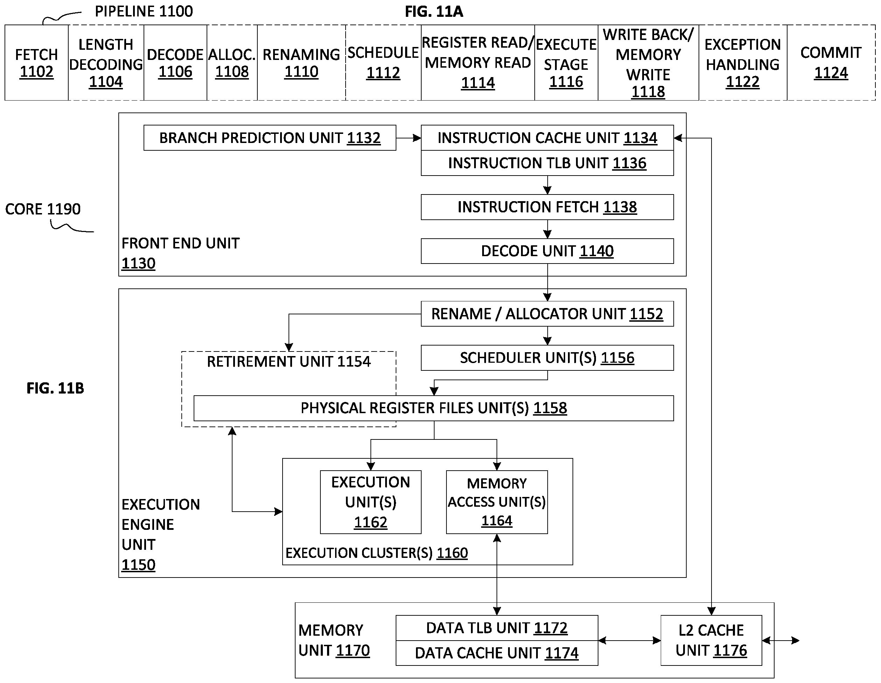

FIG. 11A is a block diagram illustrating both an exemplary in-order pipeline and an exemplary register renaming, out-of-order issue/execution pipeline according to embodiments of the invention. FIG. 11B is a block diagram illustrating both an exemplary embodiment of an in-order architecture core and an exemplary register renaming, out-of-order issue/execution architecture core to be included in a processor according to embodiments of the invention. The solid lined boxes in FIGs. 11A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 11A, a processor pipeline 1100 includes a fetch stage 1102, a length decode stage 1104, a decode stage 1106, an allocation stage 1108, a renaming stage 1110, a scheduling (also known as a dispatch or issue) stage 1112, a register read/memory read stage 1114, an execute stage 1116, a write back/memory write stage 1118, an exception handling stage 1122, and a commit stage 1124.

FIG. 11B shows processor core 1190 including a front end unit 1130 coupled to an execution engine unit 1150, and both are coupled to a memory unit 1170. The core 1190 may be a reduced instruction set computing (RISC) core, a complex instruction set computing (CISC) core, a very long instruction word (VLIW) core, or a hybrid or alternative core type. As yet another option, the core 1190 may be a special-purpose core, such as, for example, a network or communication core, compression engine, coprocessor core, general purpose computing graphics processing unit (GPGPU) core, graphics core, or the like.

The front end unit 1130 includes a branch prediction unit 1132 coupled to an instruction cache unit 1134, which is coupled to an instruction translation lookaside buffer (TLB) 1136, which is coupled to an instruction fetch unit 1138, which is coupled to a decode unit 1140. The decode unit 1140 (or decoder) may decode instructions, and generate as an output one or more micro-operations, micro-code entry points, microinstructions, other instructions, or other control signals, which are decoded from, or which otherwise reflect, or are derived from, the original instructions. The decode unit 1140 may be implemented using various different mechanisms. Examples of suitable mechanisms include, but are not limited to, look-up tables, hardware implementations, programmable logic arrays (PLAs), microcode read only memories (ROMs), etc. In one embodiment, the core 1190 includes a microcode ROM or other medium that stores microcode for certain macroinstructions (e.g., in decode unit 1140 or otherwise within the front end unit 1130). The decode unit 1140 is coupled to a rename/allocator unit 1152 in the execution engine unit 1150.

The execution engine unit 1150 includes the rename/allocator unit 1152 coupled to a retirement unit 1154 and a set of one or more scheduler unit(s) 1156. The scheduler unit(s) 1156 represents any number of different schedulers, including reservations stations, central instruction window, etc. The scheduler unit(s) 1156 is coupled to the physical register file(s) unit(s) 1158. Each of the physical register file(s) units 1158 represents one or more physical register files, different ones of which store one or more different data types, such as scalar integer, scalar floating point, packed integer, packed floating point, vector integer, vector floating point, status (e.g., an instruction pointer that is the address of the next instruction to be executed), etc. In one embodiment, the physical register file(s) unit 1158 comprises a vector registers unit, a write mask registers unit, and a scalar registers unit. These register units may provide architectural vector registers, vector mask registers, and general purpose registers. The physical register file(s) unit(s) 1158 is overlapped by the retirement unit 1154 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 1154 and the physical register file(s) unit(s) 1158 are coupled to the execution cluster(s) 1160. The execution cluster(s) 1160 includes a set of one or more execution units 1162 and a set of one or more memory access units 1164. The execution units 1162 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 1156, physical register file(s) unit(s) 1158, and execution cluster(s) 1160 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 1164). It should also be understood that where separate pipelines are used, one or more of these pipelines may be out-of-order issue/execution and the rest in-order.

The set of memory access units 1164 is coupled to the memory unit 1170, which includes a data TLB unit 1172 coupled to a data cache unit 1174 coupled to a level 2 (L2) cache unit 1176. In one exemplary embodiment, the memory access units 1164 may include a load unit, a store address unit, and a store data unit, each of which is coupled to the data TLB unit 1172 in the memory unit 1170. The instruction cache unit 1134 is further coupled to a level 2 (L2) cache unit 1176 in the memory unit 1170. The L2 cache unit 1176 is coupled to one or more other levels of cache and eventually to a main memory.

By way of example, the exemplary register renaming, out-of-order issue/execution core architecture may implement the pipeline 1100 as follows: 1) the instruction fetch 1138 performs the fetch and length decoding stages 1102 and 1104; 2) the decode unit 1140 performs the decode stage 1106; 3) the rename/allocator unit 1152 performs the allocation stage 1108 and renaming stage 1110; 4) the scheduler unit(s) 1156 performs the schedule stage 1112; 5) the physical register file(s) unit(s) 1158 and the memory unit 1170 perform the register read/memory read stage 1114; the execution cluster 1160 perform the execute stage 1116; 6) the memory unit 1170 and the physical register file(s) unit(s) 1158 perform the write back/memory write stage 1118; 7) various units may be involved in the exception handling stage 1122; and 8) the retirement unit 1154 and the physical register file(s) unit(s) 1158 perform the commit stage 1124.

The core 1190 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 1190 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel^{®} Hyperthreading technology).

While register renaming is described in the context of out-of-order execution, it should be understood that register renaming may be used in an in-order architecture. While the illustrated embodiment of the processor also includes separate instruction and data cache units 1134/1174 and a shared L2 cache unit 1176, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

### Specific Exemplary In-Order Core Architecture

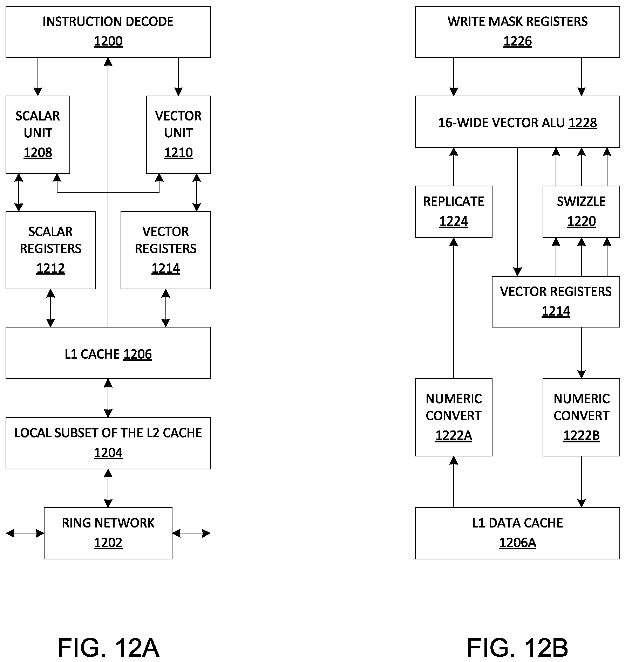

FIGs. 12A-B illustrate a block diagram of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory I/O interfaces, and other necessary I/O logic, depending on the application.

FIG. 12A is a block diagram of a single processor core, along with its connection to the on-die interconnect network 1202 and with its local subset of the Level 2 (L2) cache 1204, according to embodiments of the invention. In one embodiment, an instruction decoder 1200 supports the x86 instruction set with a packed data instruction set extension. An L1 cache 1206 allows low-latency accesses to cache memory into the scalar and vector units. While in one embodiment (to simplify the design), a scalar unit 1208 and a vector unit 1210 use separate register sets (respectively, scalar registers 1212 and vector registers 1214) and data transferred between them is written to memory and then read back in from a level 1 (L1) cache 1206, alternative embodiments of the invention may use a different approach (e.g., use a single register set or include a communication path that allow data to be transferred between the two register files without being written and read back).

The local subset of the L2 cache 1204 is part of a global L2 cache that is divided into separate local subsets, one per processor core. Each processor core has a direct access path to its own local subset of the L2 cache 1204. Data read by a processor core is stored in its L2 cache subset 1204 and can be accessed quickly, in parallel with other processor cores accessing their own local L2 cache subsets. Data written by a processor core is stored in its own L2 cache subset 1204 and is flushed from other subsets, if necessary. The ring network ensures coherency for shared data. The ring network is bi-directional to allow agents such as processor cores, L2 caches and other logic blocks to communicate with each other within the chip. Each ring data-path is 1012-bits wide per direction.

FIG. 12B is an expanded view of part of the processor core in FIG. 12A according to embodiments of the invention. FIG. 12B includes an L1 data cache 1206A part of the L1 cache 1206, as well as more detail regarding the vector unit 1210 and the vector registers 1214. Specifically, the vector unit 1210 is a 16-wide vector processing unit (VPU) (see the 16-wide ALU 1228), which executes one or more of integer, single-precision float, and double-precision float instructions. The VPU supports swizzling the register inputs with swizzle unit 1220, numeric conversion with numeric convert units 1222A-B, and replication with replication unit 1224 on the memory input. Write mask registers 1226 allow predicating resulting vector writes.

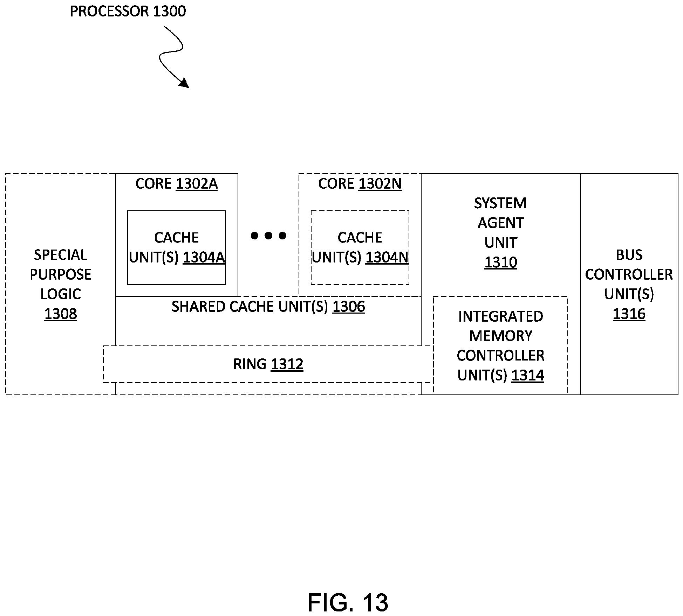

FIG. 13 is a block diagram of a processor 1300 that may have more than one core, may have an integrated memory controller, and may have integrated graphics according to embodiments of the invention. The solid lined boxes in FIG. 13 illustrate a processor 1300 with a single core 1302A, a system agent 1310, a set of one or more bus controller units 1316, while the optional addition of the dashed lined boxes illustrates an alternative processor 1300 with multiple cores 1302A-N, a set of one or more integrated memory controller unit(s) 1314 in the system agent unit 1310, and special purpose logic 1308.

Thus, different implementations of the processor 1300 may include: 1) a CPU with the special purpose logic 1308 being integrated graphics and/or scientific (throughput) logic (which may include one or more cores), and the cores 1302A-N being one or more general purpose cores (e.g., general purpose in-order cores, general purpose out-of-order cores, a combination of the two); 2) a coprocessor with the cores 1302A-N being a large number of special purpose cores intended primarily for graphics and/or scientific (throughput); and 3) a coprocessor with the cores 1302A-N being a large number of general purpose in-order cores. Thus, the processor 1300 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 1300 may be a part of and/or may be implemented on one or more substrates using any of a number of process technologies, such as, for example, BiCMOS, CMOS, or NMOS.

The memory hierarchy includes respective one or more levels of caches 1304A-N within cores 1302A-N, a set or one or more shared cache units 1306, and external memory (not shown) coupled to the set of integrated memory controller units 1314. The set of shared cache units 1306 may include one or more mid-level caches, such as level 2 (L2), level 3 (L3), level 4 (L4), or other levels of cache, a last level cache (LLC), and/or combinations thereof. While in one embodiment a ring based interconnect unit 1312 interconnects the special purpose logic 1308, the set of shared cache units 1306, and the system agent unit 1310/integrated memory controller unit(s) 1314, alternative embodiments may use any number of well-known techniques for interconnecting such units. In one embodiment, coherency is maintained between one or more cache units 1306 and cores 1302-A-N.

In some embodiments, one or more of the cores 1302A-N are capable of multithreading. The system agent 1310 includes those components coordinating and operating cores 1302A-N. The system agent unit 1310 may include for example a power control unit (PCU) and a display unit. The PCU may be or include logic and components needed for regulating the power state of the cores 1302A-N and the special purpose logic 1308. The display unit is for driving one or more externally connected displays.

The cores 1302A-N may be homogenous or heterogeneous in terms of architecture instruction set; that is, two or more of the cores 1302A-N may be capable of execution the same instruction set, while others may be capable of executing only a subset of that instruction set or a different instruction set.

### Exemplary Computer Architectures

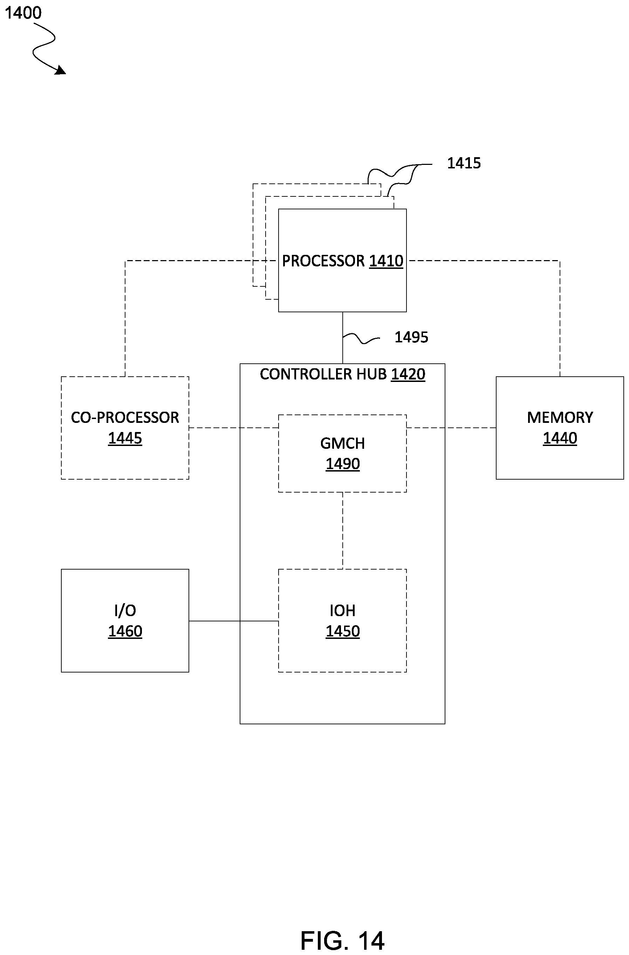

FIGs. 14 through 17 are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to FIG. 14, shown is a block diagram of a system 1400 in accordance with one embodiment of the present invention. The system 1400 may include one or more processors 1410, 1415, which are coupled to a controller hub 1420. In one embodiment the controller hub 1420 includes a graphics memory controller hub (GMCH) 1490 and an Input/Output Hub (IOH) 1450 (which may be on separate chips); the GMCH 1490 includes memory and graphics controllers to which are coupled memory 1440 and a coprocessor 1445; the IOH 1450 couples input/output (I/O) devices 1460 to the GMCH 1490. Alternatively, one or both of the memory and graphics controllers are integrated within the processor (as described herein), the memory 1440 and the coprocessor 1445 are coupled directly to the processor 1410, and the controller hub 1420 in a single chip with the IOH 1450.

The optional nature of additional processors 1415 is denoted in FIG. 14 with broken lines. Each processor 1410, 1415 may include one or more of the processing cores described herein and may be some version of the processor 1300.

The memory 1440 may be, for example, dynamic random access memory (DRAM), phase change memory (PCM), or a combination of the two. For at least one embodiment, the controller hub 1420 communicates with the processor(s) 1410, 1415 via a multi-drop bus, such as a frontside bus (FSB), point-to-point interface such as QuickPath Interconnect (QPI), or similar connection 1495.

In one embodiment, the coprocessor 1445 is a special-purpose processor, such as, for example, a high-throughput MIC processor, a network or communication processor, compression engine, graphics processor, GPGPU, embedded processor, or the like. In one embodiment, controller hub 1420 may include an integrated graphics accelerator.

There can be a variety of differences between the processors 1410, 1415 in terms of a spectrum of metrics of merit including architectural, microarchitectural, thermal, power consumption characteristics, and the like.

In one embodiment, the processor 1410 executes instructions that control data processing operations of a general type. Embedded within the instructions may be coprocessor instructions. The processor 1410 recognizes these coprocessor instructions as being of a type that should be executed by the attached coprocessor 1445. Accordingly, the processor 1410 issues these coprocessor instructions (or control signals representing coprocessor instructions) on a coprocessor bus or other interconnect, to coprocessor 1445. Coprocessor(s) 1445 accept and execute the received coprocessor instructions.

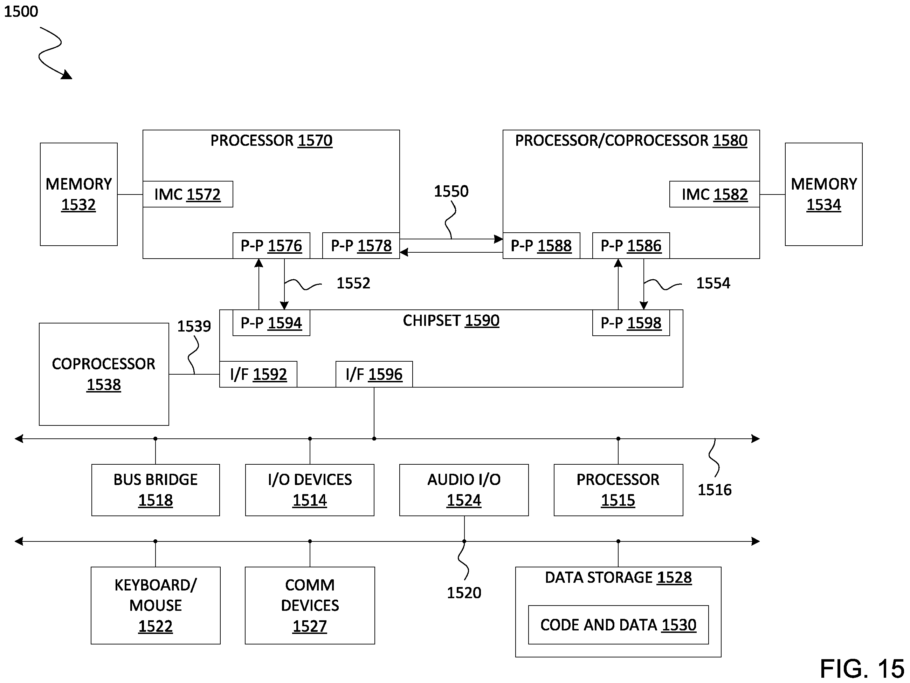

Referring now to FIG. 15, shown is a block diagram of a first more specific exemplary system 1500 in accordance with an embodiment of the present invention. As shown in FIG. 15, multiprocessor system 1500 is a point-to-point interconnect system, and includes a first processor 1570 and a second processor 1580 coupled via a point-to-point interconnect 1550. Each of processors 1570 and 1580 may be some version of the processor 1300. In one embodiment of the invention, processors 1570 and 1580 are respectively processors 1410 and 1415, while coprocessor 1538 is coprocessor 1445. In another embodiment, processors 1570 and 1580 are respectively processor 1410 coprocessor 1445.

Processors 1570 and 1580 are shown including integrated memory controller (IMC) units 1572 and 1582, respectively. Processor 1570 also includes as part of its bus controller unit's point-to-point (P-P) interfaces 1576 and 1578; similarly, second processor 1580 includes P-P interfaces 1586 and 1588. Processors 1570, 1580 may exchange information via a point-to-point (P-P) interconnect 1550 using P-P interface circuits 1578, 1588. As shown in FIG. 15, IMCs 1572 and 1582 couple the processors to respective memories, namely a memory 1532 and a memory 1534, which may be portions of main memory locally attached to the respective processors.

Processors 1570, 1580 may each exchange information with a chipset 1590 via individual P-P interfaces 1552, 1554 using point to point interface circuits 1576, 1594, 1586, 1598. Chipset 1590 may optionally exchange information with the coprocessor 1538 via a high-performance interface 1592 and an interconnect 1539. In one embodiment, the coprocessor 1538 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 1590 may be coupled to a first bus 1516 via an interface 1596. In one embodiment, first bus 1516 may be a Peripheral Component Interconnect (PCI) bus, or a bus such as a PCI Express bus or another third generation I/O interconnect bus, although the scope of the present invention is not so limited.

As shown in FIG. 15, various I/O devices 1514 may be coupled to first bus 1516, along with a bus bridge 1518 which couples first bus 1516 to a second bus 1520. In one embodiment, one or more additional processor(s) 1515, such as coprocessors, high-throughput MIC processors, GPGPU's, accelerators (such as, e.g., graphics accelerators or digital signal processing (DSP) units), field programmable gate arrays, or any other processor, are coupled to first bus 1516. In one embodiment, second bus 1520 may be a low pin count (LPC) bus. Various devices may be coupled to a second bus 1520 including, for example, a keyboard and/or mouse 1522, communication devices 1527 and a storage unit 1528 such as a disk drive or other mass storage device which may include instructions/code and data 1530, in one embodiment. Further, an audio I/O 1524 may be coupled to the second bus 1520. Note that other architectures are possible. For example, instead of the point-to-point architecture of FIG. 15, a system may implement a multi-drop bus or other such architecture.

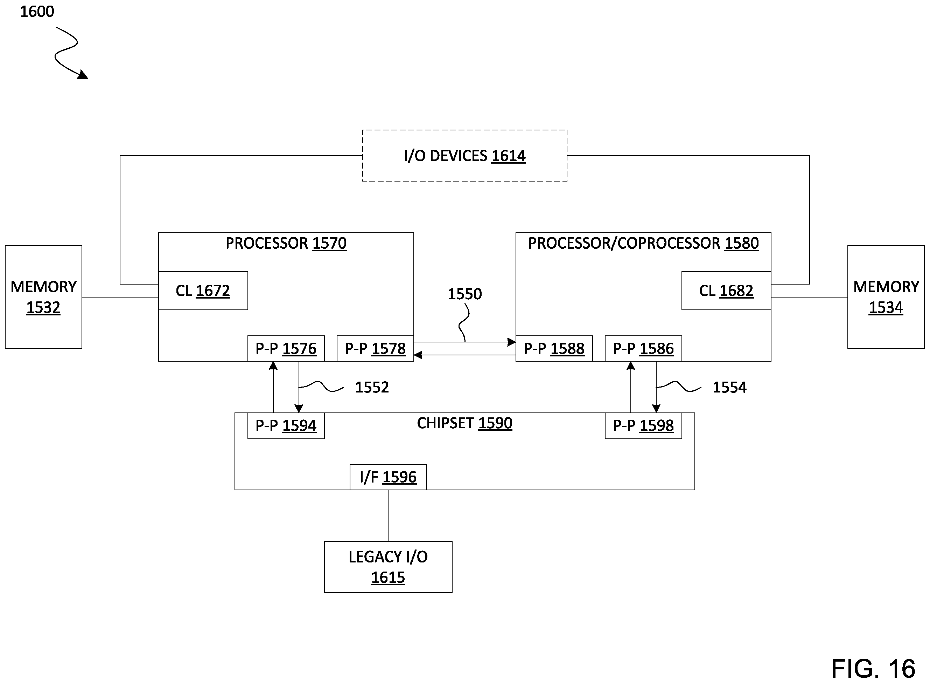

Referring now to FIG. 16, shown is a block diagram of a second more specific exemplary system 1600 in accordance with an embodiment of the present invention. Like elements in FIGs. 15 and 16 bear like reference numerals, and certain aspects of FIG. 15 have been omitted from FIG. 16 in order to avoid obscuring other aspects of FIG. 16.

FIG. 16 illustrates that the processors 1570, 1580 may include integrated memory and I/O control logic ("CL") 1672 and 1682, respectively. Thus, the CL 1672, 1682 include integrated memory controller units and include I/O control logic. FIG. 16 illustrates that not only are the memories 1532, 1534 coupled to the CL 1672, 1682, but also that I/O devices 1614 are also coupled to the control logic 1672, 1682. Legacy I/O devices 1615 are coupled to the chipset 1590.

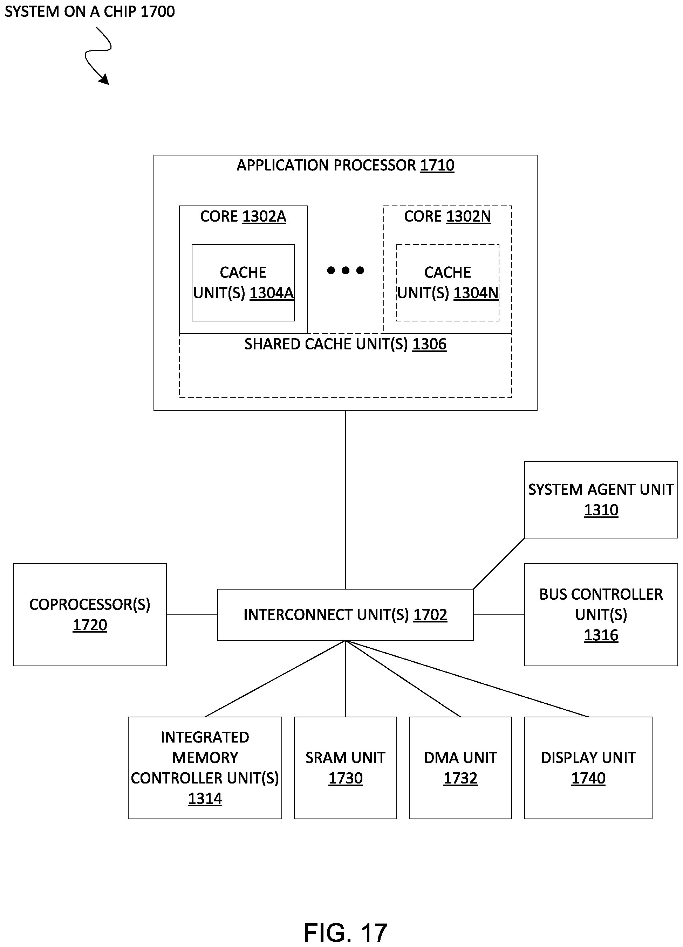

Referring now to FIG. 17, shown is a block diagram of a SoC 1700 in accordance with an embodiment of the present invention. Similar elements in FIG. 13 bear like reference numerals. Also, dashed lined boxes are optional features on more advanced SoCs. In FIG. 17, an interconnect unit(s) 1702 is coupled to: an application processor 1710 which includes a set of one or more cores 1302A-N and shared cache unit(s) 1306; a system agent unit 1310; a bus controller unit(s) 1316; an integrated memory controller unit(s) 1314; a set or one or more coprocessors 1720 which may include integrated graphics logic, an image processor, an audio processor, and a video processor; an static random access memory (SRAM) unit 1730; a direct memory access (DMA) unit 1732; and a display unit 1740 for coupling to one or more external displays. In one embodiment, the coprocessor(s) 1720 include a special-purpose processor, such as, for example, a network or communication processor, compression engine, GPGPU, a high-throughput MIC processor, embedded processor, or the like.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

Program code, such as code 1530 illustrated in FIG. 15, may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

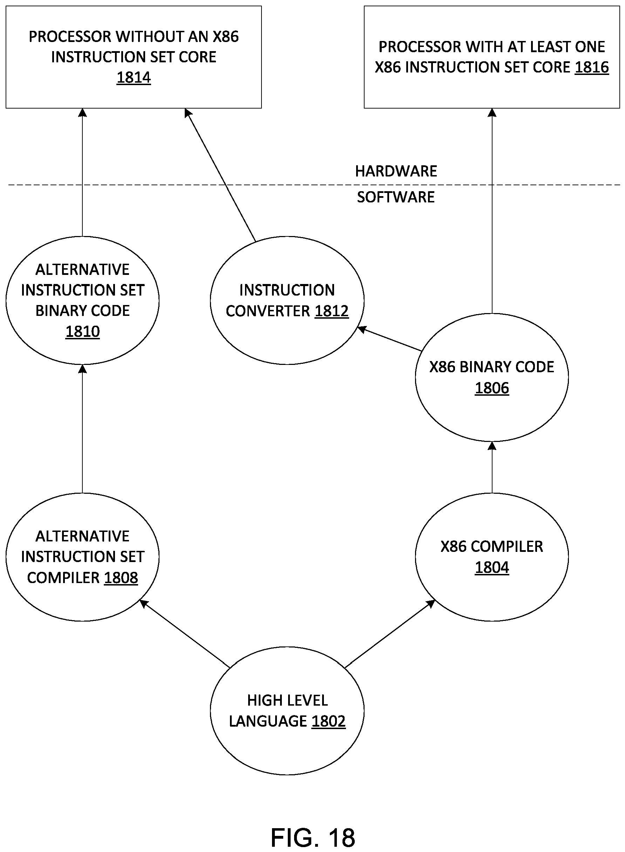

FIG. 18 is a block diagram contrasting the use of a software instruction converter to convert binary instructions in a source instruction set to binary instructions in a target instruction set according to embodiments of the invention. In the illustrated embodiment, the instruction converter is a software instruction converter, although alternatively the instruction converter may be implemented in software, firmware, hardware, or various combinations thereof. FIG. 18 shows a program in a high level language 1802 may be compiled using an x86 compiler 1804 to generate x86 binary code 1806 that may be natively executed by a processor with at least one x86 instruction set core 1816. The processor with at least one x86 instruction set core 1816 represents any processor that can perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler 1804 represents a compiler that is operable to generate x86 binary code 1806 (e.g., object code) that can, with or without additional linkage processing, be executed on the processor with at least one x86 instruction set core 1816. Similarly, FIG. 18 shows the program in the high level language 1802 may be compiled using an alternative instruction set compiler 1808 to generate alternative instruction set binary code 1810 that may be natively executed by a processor without at least one x86 instruction set core 1814 (e.g., a processor with cores that execute the MIPS instruction set of MIPS Technologies of Sunnyvale, CA and/or that execute the ARM instruction set of ARM Holdings of Sunnyvale, CA). The instruction converter 1812 is used to convert the x86 binary code 1806 into code that may be natively executed by the processor without an x86 instruction set core 1814. This converted code is not likely to be the same as the alternative instruction set binary code 1810 because an instruction converter capable of this is difficult to make; however, the converted code will accomplish the general operation and be made up of instructions from the alternative instruction set. Thus, the instruction converter 1812 represents software, firmware, hardware, or a combination thereof that, through emulation, simulation or any other process, allows a processor or other electronic device that does not have an x86 instruction set processor or core to execute the x86 binary code 1806.

Techniques and architectures for providing event-based sampling information are described herein. In the above description, for purposes of explanation, numerous specific details are set forth in order to provide a thorough understanding of certain embodiments. It will be apparent, however, to one skilled in the art that certain embodiments can be practiced without these specific details. In other instances, structures and devices are shown in block diagram form in order to avoid obscuring the description.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

Some portions of the detailed description herein are presented in terms of algorithms and symbolic representations of operations on data bits within a computer memory. These algorithmic descriptions and representations are the means used by those skilled in the computing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the discussion herein, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Certain embodiments also relate to apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs) such as dynamic RAM (DRAM), EPROMs, EEPROMs, magnetic or optical cards, or any type of media suitable for storing electronic instructions, and coupled to a computer system bus.

The algorithms and displays presented herein are not inherently related to any particular computer or other apparatus. Various general purpose systems may be used with programs in accordance with the teachings herein, or it may prove convenient to construct more specialized apparatus to perform the required method steps. The required structure for a variety of these systems will appear from the description herein. In addition, certain embodiments are not described with reference to any particular programming language. It will be appreciated that a variety of programming languages may be used to implement the teachings of such embodiments as described herein.

In one or more first embodiments, a processor comprises model specific registers (MSRs) comprising a first model specific register (MSR) and a second MSR, first circuitry coupled to the MSRs, wherein the first circuitry is to advertise an availability of the MSRs to provide access to an output buffer, receive a request to create the output buffer, and based on the request, store to the first MSR a first physical address of a location of the output buffer. The processor further comprises second circuitry coupled to the MSRs, the second circuitry to maintain at the second MSR a count of instances of an event during an execution of a process by the processor, and third circuitry coupled to the MSRs, the third circuitry to detect an overflow of the count, and based on the overflow sample a state of the processor, generate a record comprising information which indicates the state, and store the record to the output buffer.

In one or more second embodiments, further to the first embodiment, the first physical address identifies a start of the output buffer.

In one or more third embodiments, further to the second embodiment, the first MSR is further to store an indication of size of the output buffer.

In one or more fourth embodiments, further to the first embodiment or the second embodiment, the MSRs further comprise a third MSR to store a second physical address which identifies a location in the output buffer where a next record is to be stored, and wherein the third circuitry is to store the record further based on the second physical address.

In one or more fifth embodiments, further to any of the first, second or fourth embodiments, the MSRs comprise a first plurality of MSRs which are each to provide a respective performance counter.

In one or more sixth embodiments, further to the fifth embodiment, the first plurality of MSRs comprises a first one or more MSRs which are each to provide a different respective general purpose performance counter.

In one or more seventh embodiments, further to the fifth embodiment, the first plurality of MSRs comprises a first one or more MSRs which are each to provide a different respective fixed function performance counter.

In one or more eighth embodiments, further to the fifth embodiment, the MSRs further comprise a first one or more MSRs which each correspond to a different respective one of the first plurality of MSRs, wherein, for each of the first one or more MSRs, the MSR is to identify a type of information which is to be included in a record based on an overflow by a performance counter which is provided with the corresponding one of the first plurality of MSRs In one or more ninth embodiments, further to any of the first, second or fourth embodiments, the MSRs are each of a first register type which corresponds to a first model legacy prioritization, wherein the processor further comprises other MSRs which are each of a second register type which corresponds to a second model legacy prioritization that is less than the first model legacy prioritization.

In one or more tenth embodiments, a method at a processor comprises advertising an availability of model specific registers (MSRs) of the processor to provide access to an output buffer, the MSRs comprising a first model specific register (MSR) and a second MSR, receiving a request to create the output buffer, based on the request, storing to the first MSR a first physical address of a location of the output buffer, maintaining at the second MSR a count of instances of an event during an execution of a process by the processor, detecting an overflow of the count, and based on the overflow sampling a state of the processor, generating a record comprising information which indicates the state, and storing the record to the output buffer.

In one or more eleventh embodiments, further to the tenth embodiment, the first physical address identifies a start of the output buffer.

In one or more twelfth embodiments, further to the eleventh embodiment, the method further comprises storing to the first MSR an indication of size of the output buffer.

In one or more thirteenth embodiments, further to the tenth embodiment or the eleventh embodiment, the method further comprises storing to a third MSR of the MSRs a second physical address which identifies a location in the output buffer where a next record is to be stored, wherein storing the record to the output buffer is further based on the second physical address.

In one or more fourteenth embodiments, further to any of the tenth, eleventh, or thirteenth embodiments, the MSRs comprise a first plurality of MSRs, the method further comprising providing performance counters each with a different respective one of the first plurality of MSRs.

In one or more fifteenth embodiments, further to the fourteenth embodiment, the first plurality of MSRs comprises one or more MSRs which each provide a different respective general purpose performance counter.

In one or more sixteenth embodiments, further to the fourteenth embodiment, the first plurality of MSRs comprises one or more MSRs which each provide a different respective fixed function performance counter.

In one or more seventeenth embodiments, further to the fourteenth embodiment, the MSRs further comprise a first one or more MSRs which each correspond to a different respective one of the first plurality of MSRs, and the method further comprises for each of the first one or more MSRs, programming the MSR to identify a type of information which is to be included in a record based on an overflow by a performance counter which is provided with the corresponding one of the first plurality of MSRs.

In one or more eighteenth embodiments, further to any of the tenth, eleventh, or thirteenth embodiments, the MSRs are each of a first register type which corresponds to a first model legacy prioritization, wherein the processor further comprises other MSRs which are each of a second register type which corresponds to a second model legacy prioritization that is less than the first model legacy prioritization.

In one or more nineteenth embodiments, a system comprises a processor comprising model specific registers (MSRs) comprising a first model specific register (MSR) and a second MSR, first circuitry coupled to the MSRs, wherein the first circuitry is to advertise an availability of the MSRs to provide access to an output buffer, receive a request to create the output buffer, and based on the request, store to the first MSR a first physical address of a location of the output buffer. The processor further comprises second circuitry coupled to the MSRs, the second circuitry to maintain at the second MSR a count of instances of an event during an execution of a process by the processor, and third circuitry coupled to the MSRs, the third circuitry to detect an overflow of the count, and based on the overflow sample a state of the processor, generate a record comprising information which indicates the state, and store the record to the output buffer. The system further comprises a memory coupled to the processor, the memory to store a set of instructions to be executed by the processor.

In one or more twentieth embodiments, further to the nineteenth embodiment, the first physical address identifies a start of the output buffer.

In one or more twenty-first embodiments, further to the twentieth embodiment, the first MSR is further to store an indication of size of the output buffer.

In one or more twenty-second embodiments, further to the nineteenth embodiment or the twentieth embodiment, the MSRs further comprise a third MSR to store a second physical address which identifies a location in the output buffer where a next record is to be stored, and wherein the third circuitry is to store the record further based on the second physical address.

In one or more twenty-third embodiments, further to any of the nineteenth, twentieth, or twenty-second embodiments, the MSRs comprise a first plurality of MSRs which are each to provide a respective performance counter.

In one or more twenty-fourth embodiments, further to the twenty-third embodiment, the first plurality of MSRs comprises a first one or more MSRs which are each to provide a different respective general purpose performance counter.

In one or more twenty-fifth embodiments, further to the twenty-third embodiment, the first plurality of MSRs comprises a first one or more MSRs which are each to provide a different respective fixed function performance counter.

In one or more twenty-sixth embodiments, further to the twenty-third embodiment, the MSRs further comprise a first one or more MSRs which each correspond to a different respective one of the first plurality of MSRs wherein, for each of the first one or more MSRs, the MSR is to identify a type of information which is to be included in a record based on an overflow by a performance counter which is provided with the corresponding one of the first plurality of MSRs In one or more twenty-seventh embodiments, further to any of the nineteenth, twentieth, or twenty-second embodiments, the MSRs are each of a first register type which corresponds to a first model legacy prioritization, wherein the processor further comprises other MSRs which are each of a second register type which corresponds to a second model legacy prioritization that is less than the first model legacy prioritization.

Besides what is described herein, various modifications may be made to the disclosed embodiments and implementations thereof without departing from their scope. Therefore, the illustrations and examples herein should be construed in an illustrative, and not a restrictive sense. The scope of the invention should be measured solely by reference to the claims that follow.

## Claims

1. A processor comprising:
model specific registers (MSRs) comprising a first model specific register (MSR) and a second MSR;
first circuitry coupled to the MSRs, wherein the first circuitry is to:
advertise an availability of the MSRs to provide access to an output buffer;
receive a request to create the output buffer; and
based on the request, store to the first MSR a first physical address of a location of the output buffer;
second circuitry coupled to the MSRs, the second circuitry to maintain at the second MSR a count of instances of an event during an execution of a process by the processor; and
third circuitry coupled to the MSRs, the third circuitry to:
detect an overflow of the count; and
based on the overflow:
sample a state of the processor;
generate a record comprising information which indicates the state; and
store the record to the output buffer.

2. The processor of claim 1, wherein the first physical address identifies a start of the output buffer.

3. The processor of claim 2, wherein the first MSR is further to store an indication of size of the output buffer.

4. The processor of claim 1 or claim 2, wherein the MSRs further comprise a third MSR to store a second physical address which identifies a location in the output buffer where a next record is to be stored; and
wherein the third circuitry is to store the record further based on the second physical address.

5. The processor of claim 1 or claim 2, wherein the MSRs comprise a first plurality of MSRs which are each to provide a respective performance counter.

6. The processor of claim 5, wherein the first plurality of MSRs comprises a first one or more MSRs which are each to provide a different respective general purpose performance counter.

7. The processor of claim 5, wherein the first plurality of MSRs comprises a first one or more MSRs which are each to provide a different respective fixed function performance counter.

8. The processor of claim 5, wherein the MSRs further comprise a first one or more MSRs which each correspond to a different respective one of the first plurality of MSRs; and
wherein, for each of the first one or more MSRs, the MSR is to identify a type of information which is to be included in a record based on an overflow by a performance counter which is provided with the corresponding one of the first plurality of MSRs.

9. The processor of claim 1 or claim 2, wherein the MSRs are each of a first register type which corresponds to a first model legacy prioritization, and wherein the processor further comprises other MSRs which are each of a second register type which corresponds to a second model legacy prioritization that is less than the first model legacy prioritization.

10. A method at a processor, the method comprising:
advertising an availability of model specific registers (MSRs) of the processor to provide access to an output buffer, the MSRs comprising a first model specific register (MSR) and a second MSR;
receiving a request to create the output buffer;
based on the request, storing to the first MSR a first physical address of a location of the output buffer;
maintaining at the second MSR a count of instances of an event during an execution of a process by the processor;
detecting an overflow of the count; and
based on the overflow:
sampling a state of the processor;
generating a record comprising information which indicates the state; and
storing the record to the output buffer.

11. The method of claim 10, wherein the first physical address identifies a start of the output buffer.

12. The method of claim 11, further comprising storing to the first MSR an indication of size of the output buffer.

13. The method of claim 10 or claim 11, further comprising storing to a third MSR of the MSRs a second physical address which identifies a location in the output buffer where a next record is to be stored;
wherein storing the record to the output buffer is further based on the second physical address.

14. The method of claim 10 or claim 11, wherein the MSRs comprise a first plurality of MSRs, the method further comprising providing performance counters each with a different respective one of the first plurality of MSRs.

15. The method of claim 10 or claim 11, wherein the MSRs are each of a first register type which corresponds to a first model legacy prioritization, and wherein the processor further comprises other MSRs which are each of a second register type which corresponds to a second model legacy prioritization that is less than the first model legacy prioritization.
